(19) Europäisches Patentamt
European Patent Office
Office européen des brevets

(11) **EP 2 371 075 B1**

(12) **EUROPEAN PATENT SPECIFICATION**

(45) Date of publication and mention
of the grant of the patent:
**18.04.2018 Bulletin 2018/16**

(51) Int Cl.:
*H04B 17/10* (2015.01)   *H04B 17/21* (2015.01)
*H01Q 3/26* (2006.01)   *H04B 7/06* (2006.01)
*H04B 7/08* (2006.01)

(21) Application number: **09765071.7**

(22) Date of filing: **26.11.2009**

(86) International application number:
**PCT/EP2009/065885**

(87) International publication number:
**WO 2010/060953 (03.06.2010 Gazette 2010/22)**

(54) **A CALIBRATION APPARATUS AND A METHOD FOR GENERATING AT LEAST ONE CALIBRATION SIGNAL FOR AN ANTENNA ARRAY**

KALIBRIERUNGSVORRICHTUNG UND VERFAHREN ZUR ERZEUGUNG VON ZUMINDEST EINEM KALIBRIERUNGSSIGNAL FÜR EIN ANTENNEN-ARRAY

APPAREIL ET PROCÉDÉ D'ÉTALONNAGE POUR GÉNÉRER AU MOINS UN SIGNAL D'ÉTALONNAGE POUR UN RÉSEAU D'ANTENNES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.11.2008 GB 0821580**
**26.11.2008 US 118391 P**

(43) Date of publication of application:
**05.10.2011 Bulletin 2011/40**

(73) Proprietor: **KATHREIN-Werke KG**
**83004 Rosenheim (DE)**

(72) Inventors:
• **KENINGTON, Peter**
**Devauden**
**Chepstow NP16 6PE (GB)**

• **SCHMIDT, Georg**
**89081 Ulm (DE)**

(74) Representative: **Harrison, Robert John et al**
**24IP Law Group**
**Sonnenberg Fortmann**
**Patent- und Rechtsanwälte**
**Postfach 33 08 65**
**80068 München (DE)**

(56) References cited:
**EP-A1- 0 938 204     WO-A1-03/028248**
**US-A1- 2006 183 504**

## Description

CROSS-REFERENCE TO RELATED APPLICATIONS

This application claims priority to and benefit of UK patent application No. 0821580.8, filed Nov. 26, 2008, and also of U.S. provisional application No. 61/118,391, filed Nov. 26, 2008.

FIELD OF THE INVENTION

The invention relates to a calibration apparatus for an antenna array. The invention further relates to a method of generating a calibration signal. The invention further relates to a computer program product enabling a processor to carry out the methode of generating a calibration signal according to the invention.

BACKGROUND OF THE INVENTION

With the increasing use of mobile communication systems, operators of mobile communications systems need more transmitters, such as for example base stations, in order to meet the increased demand for telecommunication. Increasing the number of the base stations is expensive for the systems operator. For example, maintenance of the base stations may require an engineer to be present at the site of the base station. The increased number of base stations could therefore require an increased number of service engineers to serve the increased number of base stations.

There are several code sharing (Code Division Multiple Access CDMA) and time division (Time Division Multiple Access TDMA) strategies to increase the amount of customers served by an individual one of the base stations. The code sharing and time division strategies rely on the base station to transmit and receive, i.e. to transceive communication data as reliably as possible. This transmission and reception requires a base station to comply with a specification of a communication protocol, such as 3GPP. The transmission and receiving may be implemented using separate sets of antenna elements for transmission and reception or by using a single set of antenna elements as a combined transceiver element.

Nowadays antenna arrays are often used in the field of mobile communications systems in order to reduce the power transmitted to a handset of a customer and thereby increase the efficiency of the base station. The antenna arrays typically comprise a plurality of the antenna elements that are capable of transceiving a payload signal. The antenna arrays used in the base station allow steering the beam transmitted by the antenna array. This steering of the beam includes but is not limited to at least one of: detection of direction of arrival (DOA), beam forming, down tilting, beam diversity. These techniques of beam steering are well known in the art.

The code sharing and time division strategies as well as the beam steering rely on the antenna array to transmit and receive within well defined limits set by the communication standards. The communication standards typically provide a plurality of channels or frequency bands that may be used for an uplink communication from the handset to the base station as well as for a downlink communication from the base station to the handset. For the antenna array to comply with the communication standards it is of interest to reduce so called out of band emission, i.e. transmission out of a communication frequency band or channel, as defined by the communication standard. To reduce the out of band emission, one needs the antenna array to transmit radiation with a well defined phase and amplitude relation between individual ones of the antenna elements. The defined phase and amplitude relation between the antenna elements may, for example, be achieved by means of calibrating the transceiver path of the antenna array.

It is often expensive to mount only the antenna elements and active receiver components on top of the base station, whereas power components are located at a bottom of the base station. This is because additional space is required to host rather bulky equipment at the bottom of the base station. Signals need to be transferred from a top part of the base station to the bottom, where the signals are fed into networks. Cables carrying the received signals down a tower from the top part of the base station may lead to further phase differences due to different cable lengths.

One known method for calibrating an antenna array is to use a common reference point for all antenna elements. The distance to the common reference point is known for all antenna elements that are to be calibrated. US 6 693 588 B1 to Siemens Inc. discloses such a method for calibrating an antenna array.

There are further methods known in the art for calibrating an antenna array. One approach is to use a dedicated calibration signal for calibrating the transceiver path. The dedicated calibration signal may be used during idle times of the base station, such as time gaps, before the communication between the handset and the base station is initiated in the uplink direction or the downlink direction between the handset and the base station.

EP 1 585 231 A1 to Da Tang Mobile Communications discloses a method for calibrating smart antenna array systems in real time. A pre-calibration of the antenna element is carried out during the manufacture thereof. When installed, the calibration of individual ones of the antenna elements is carried out during the idle times of the base station, which of course interrupts the operation of the base station.

EP 1 178 562 A1 to Ericsson Inc. teaches the use of a dedicated channel for calibrating the base station during normal operation. The calibration is carried out for transmission or reception of one transceiver path at a time using the calibration signal. In case of calibrating the transmit path, the calibration signal, for example a low power spread spectrum signal, is injected into the payload signal and relayed along the transmit path and as received signal is correlated with the calibration signal. The base station will treat the calibration signal in the form of a low power spread spectrum as an additional user using the base station for mobile communications. In high traffic times the number of users may exceed the possible number of users when calibrating the base station using the dedicated calibration signal. This may, in the worst case, lead to a breakdown of telecommunications service for the base station.

EP 0 938 204 A1 to Matsushita Electric Inc. discloses a calibration device for an array antenna radio receive system. The array antenna radio receive system comprises an array antenna containing a plurality of antenna elements and a plurality of radio reception units provided for said antenna elements. A calibration signal with substantially the same frequency band as a spread signal used for spread spectrum communications is passed through said radio reception units and the delay characteristic or amplitude characteristic of said radio reception units is detected from said calibration signal that has passed said radio reception units. The Matsushita system does not teach a calibration of a transmit system. The Matsushita system does not provide a calibration signal comprising at least one portion of negligible magnitude within a calibration signal envelope.

SUMMARY OF THE INVENTION

The invention is defined in the independent claims. Further developments of the invention are the subject of the dependent claims.

A calibration apparatus according to the present disclosure comprises at least one calibration signal generator and an antenna array. The antenna array comprises at least one transceiver path. The at least one transceiver path is terminated by an antenna element. The antenna element is adapted for relaying a multi-carrier payload signal within a spectral calibration signal envelope. The at least one calibration signal generator is adapted to generate at least one calibration signal within a calibration signal envelope. The at least one calibration signal is adapted to calibrate the antenna array. The spectral payload envelope substantially covers the same frequency range as the spectral calibration signal envelope. The spectral calibration signal envelope comprises at least one segment of negligible calibration signal magnitude.

In the context of this disclosure the term "spectral calibration signal envelope" is intended to mean the spectrum of the calibration signal.

The transceiver path is a path along which signals travel, before or after the signals reach an antenna element and are relayed. The term "relaying" shall be construed throughout this disclosure as comprising both transmitting and receiving. The transmitting and receiving may be achieved with the same antenna array. Alternatively and without any limitation it is possible to use a distinct antenna array for the receiving and a further antenna array for the transmission. The at least one transceiver path comprises a transmit portion of the transceiver path along which the signals travel before they are transmitted by the antenna element. The antenna element terminates the at lest one transceiver path.

The at least one transceiver path further comprises a receive portion of the transceiver path along which the signals travel after reception at the antenna element. The term "spectral envelope" shall be construed as defining a frequency range within which a signal of non-vanishing magnitude occurs. The spectral envelope of the signal may be defined by a communication standard or a signal generator. The spectral envelope may comprise portions of vanishing magnitude for the signal. An alternative way of thinking about the spectral envelope is to consider the spectral envelope to be a mask that defines within which frequency range the signal may occur.

According to the present disclosure a spectral payload envelope characterises the spectral envelope within which the payload signal may occur. The spectral payload envelope may comprise portions or segments of substantially vanishing magnitude of the payload signal. The segments of substantially vanishing magnitude of the payload signal may be defined by the communication standard, for example due to the definition of separate channels being spaced on a frequency axis.

The spectral calibration signal envelope characterises the spectral envelope within which the at least one calibration signal may occur. The spectral calibration signal envelope may comprise segments of substantially vanishing magnitude of the at least one calibration signal.

According to a further aspect the present disclosure discloses a method of generating at least one calibration signal. The method comprises providing a spectral calibration signal envelope comprising at least one segment of negligible calibration signal magnitude. The method comprises providing at least one calibration signal within a spectral calibration signal envelope. The at least one calibration signal is adapted for calibration of an antenna array. The method further comprises relaying the at least one calibration signal along at least a portion of at least one transceiver path of the antenna array. The at least one transceiver path is terminated by an antenna element, wherein each one of the transceiver paths is adapted to relay a multi-carrier payload signal within a spectral payload envelope.

The present disclosure teaches, according to another aspect of the invention a method for calibrating an antenna array which comprises generating at least one calibration signal within a calibration signal envelope according to the method of generating the at least one calibration signal and relaying the at least one calibration signal along at least a portion of at least one transceiver path of the antenna array to calibrate the antenna array. The at least one transceiver path is terminated by an antenna element. Each one of the transceiver paths is adapted to relay a multi-carrier payload signal within a spectral payload envelope.

The disclosure teaches, according to yet another aspect of the invention, a computer program product embodied on a computer-readable medium and comprising executable instructions for the manufacture of the calibration apparatus according to the present invention.

According to yet another aspect of the disclosure, a computer program product comprising instructions are taught that enable a processor to carry out the method of generating the at least one calibration signal and to carry out the method of calibrating the antenna array.

According to a further aspect of the disclosure, an antenna array is provided. The antenna array comprises at least one transceiver path, a calibration apparatus according to the invention and a signal conditioner. The at least one transceiver path is terminated by an antenna element. The antenna element is adapted to relay a multi-carrier payload signal, with an adjustable phase and magnitude difference between the transceiver paths. The signal conditioner is adapted to impose phase and magnitude changes to each one of the at least one transceiver paths using the phase and magnitude differences between the transceiver paths.

BRIEF DESCRIPTION OF THE DRAWINGS

Fig. 1a shows a block diagram of a first example of the present calibration apparatus 1.

Fig. 1b shows a block diagram of a second example of the present calibration apparatus 1.

Fig. 2 shows a block diagram of an example of a calibration signal generator 31 of the calibration apparatus 1.

Fig. 3 shows a calibration signal 30 within a spectral calibration signal envelope 35 and a multi-carrier payload signal 20 within a spectral payload envelope 25.

Fig. 4 shows an auto correlation of the calibration signal 30 comprising side lobes 8000.

Fig. 5 shows a correlation or cross correlation of the multi-carrier payload signal 20 and the calibration signal 30 yielding a side lobe detected as main peak 8100 different to the true main peak 8200.

Fig. 6 shows a symmetrised multi-carrier payload signal 20' and a symmetrised calibration signal 30'.

Fig. 7 shows an auto correlation of the symmetrised calibration signal 30' with no side lobes 8000 present as in Fig. 4.

Fig. 8 shows a correlation or cross correlation of the symmetrised payload signal 20' with the symmetrised calibration signal 30'.

Fig. 9 shows the calibration apparatus 1 for calibration of the receive portion of the at least one transmit path 10-1, 10-2, ..., 10-N.

Fig. 10a shows another example of the calibration signal 30 within the spectral calibration signal envelope 35 according to the calibration apparatus 1.

Fig. 10b shows a first example of a received signal 400 comprising the multi-carrier payload signal 20 and the calibration signal 30 according to Figure 10a.

Fig. 10c shows a second example of the received signal 400 comprising the multi-carrier payload signal 20 and the calibration signal 30 according Figure 10a.

Fig. 10d shows a third example of the received signal 400 comprising the multi-carrier payload signal 20 and the calibration signal 30 according to Figure 10a.

Fig. 11 shows a block-diagram illustrating a method 3000 for generating the calibration signal 30, 30-1, 30-2, ..., 30-N according to the teachings disclosed herein.

Fig. 12 shows a block-diagram illustrating a method for calibrating the antenna array 11.

DETAILLED DESCRIPTION OF THE INVENTION

For a better understanding of the present invention reference shall now be made to the preferred aspects of the present invention, examples of which are illustrated in the accompanying drawings.

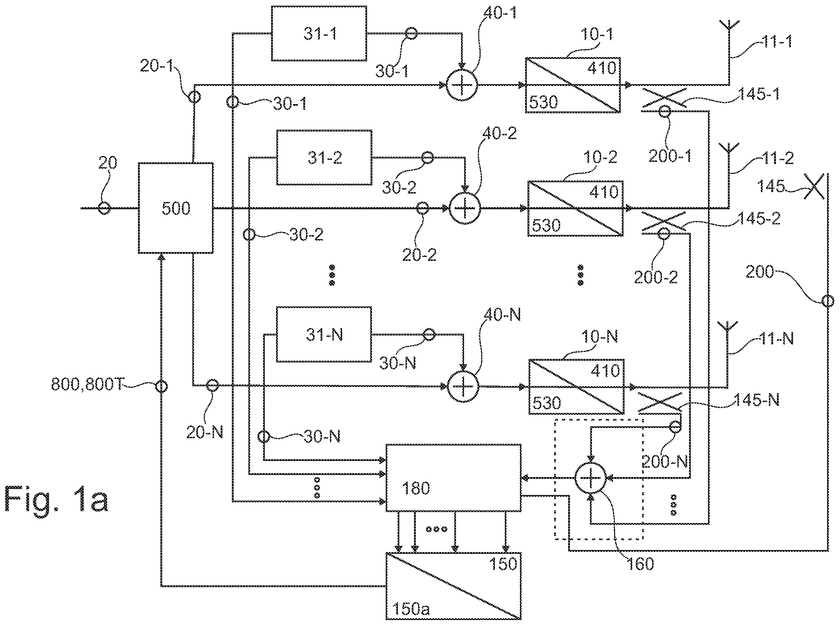

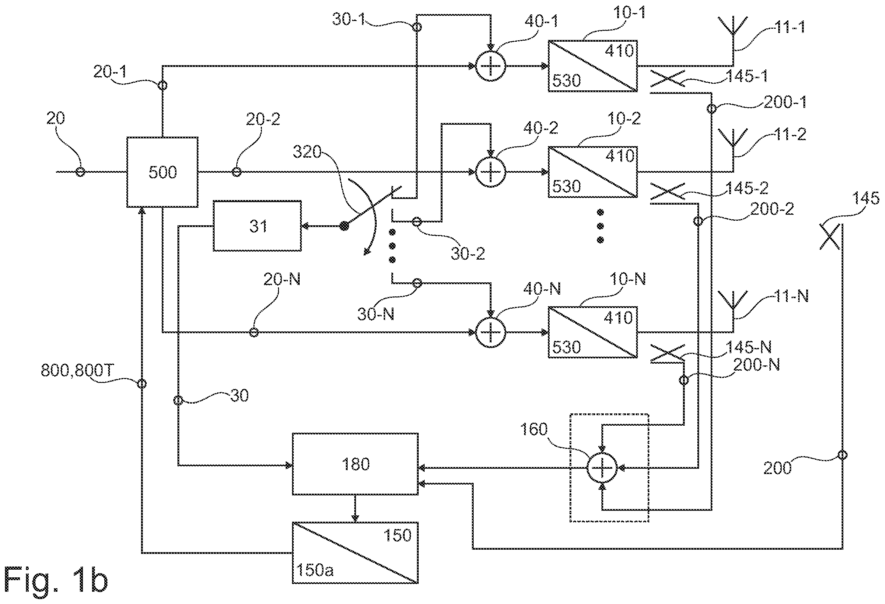

Figure 1a shows a block diagram for a calibration apparatus 1, for use when calibrating a transmit portion of at least one transceiver path 10-1, 10-2, ..., 10-N. A transmit portion of the transceiver path 10-1, 10-2, ..., 10-N may, for simplicity, also be referred to as a transmit path. Figure 1 shows an example comprising N ones of the transceiver paths 10-1, 10-2, ..., 10-N. N can be any integer number - without any limitation only three examples of the transceiver paths 10-1, 10-2, ..., 10-N are depicted. Figure 1a shows parts of the calibration apparatus 1 that are needed for calibration of the transmit portion of the at least one transceiver paths 10-1, 10-2, ..., 10-N. Figure 1 shows a multi-carrier payload signal 20, or short the payload signal 20, being feed into a signal conditioner 500. The signal conditioner 500 may comprise a digital signal processor (DSP). The multi-carrier payload signal 20 branches out from the signal conditioner 500 into the multi-carrier payload signals 20-1, 20-2, ..., 20-N that are forwarded along the transceiver paths 10-1, 10-2, ..., 10-N. Each of the transceiver paths 10-1, 10-2, ..., 10-N is terminated by an antenna element 11-1, 11-2, ..., 11-N. Each one of the antenna elements 11-2, 11-2, ..., 11-N relays the multi-carrier payload signal 20.

It is assumed that the multi-carrier payload signal 20 for the calibration apparatus 1 is provided in a digital format, for example pairs of in phase components (I) and quadrature components (Q), as is known in the art. The multi-carrier payload signal 20 may be provided as a base band payload signal (not shown) at the input stage of the calibration apparatus 1. The base band payload signal would require up-conversion to a frequency band at which the antenna array 10 is capable of relaying the multi-carrier payload signals 20. Prior to relaying the multi-carrier payload signal 20, the multi-carrier payload signal 20 would further need to be converted from digital to analogue by a digital to analogue converter (DAC), as is known in the field. The digital to analogue converter may comprise a sigma delta DAC. The digital to analogue conversion is not shown within Figure 1. The signals transmitted along the transmit portion of the transceiver path 10-1, 10-2, ..., 10-N are kept in the digital format as long as possible. The antenna element 11-1, 11-2, ..., 11-N relays the multi-carrier payload signals 20 in an analogue form. A transmit signal is converted from digital to analogue within the transmit portion of the transceiver path 10-1, 10-2, ..., 10-N prior to transmission. The digital to analogue converters are not shown within Figure 1. The digital to analogue converters may comprise a sigma delta digital to analogue converter.

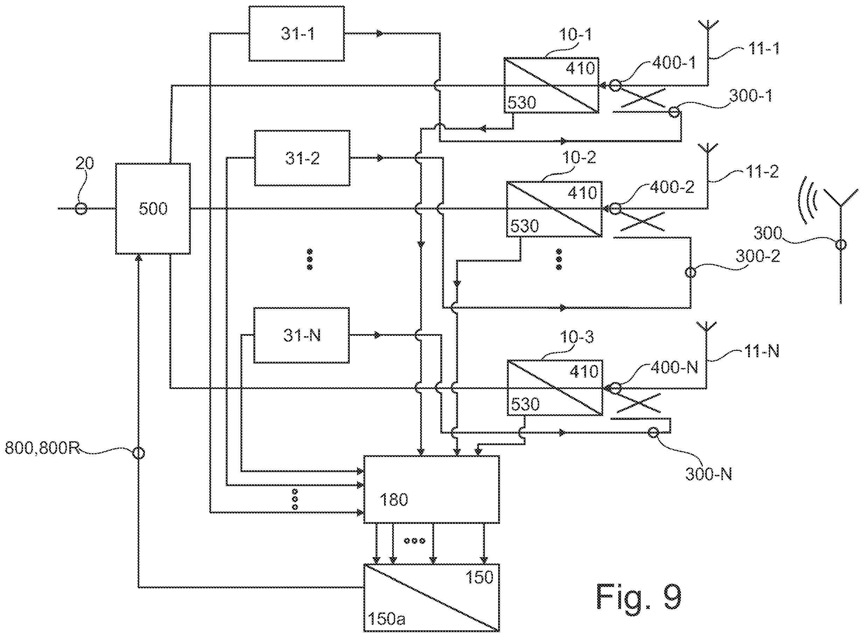

A received signal 400-1, 400-2, ..., 400-N (shown in Fig. 9) is converted analogue to digital by an analogue to digital converter (ADC) within a receive portion of the transceiver path 10-1, 10-2, ..., 10-N. The analogue to digital converter may comprise sigma delta ADCs. Typically the analogue to digital conversion follows amplification of the received signal 400-1, 400-2, ..., 400-N. The analogue to digital converters are not shown within Figure 1a.

Each transceiver path 10-1, 10-2, ..., 10-N is shown with a calibration signal generator 31-1, 31-2, ..., 31-N in Figure 1. The calibration signal generator 31-1, 31-2, ..., 31-N may not necessarily be provided for each one of the transceiver paths 10-1, 10-2, ..., 10-N. It is of interest for the calibration signal 30, 30-1, 30-2, ..., 30-N to be distinguishable for individual ones of the transceiver paths 10-1, 10-2, ..., 10-N, thus allowing the calibration of more than one transmit portion of the transceiver paths 10-1, 10-2, ...., 10-N at the same time. Methods of making the calibration signals distinguishable are known in the art.

Figure 1b shows a second example of the calibration apparatus 1. In this second example individual ones of the transceiver paths 10-1, 10-2, ..., 10-N are calibrated at a time. The signal generator 31 provides the calibration signal 30 to the individual one of the transceiver path 10-1, 10-2, ..., 10-N. The selection of the individual transceiver path 10-1, 10-2, ..., 10-N is implemented using a switch 320. In this case the time taken for the calibration is longer. Hardware costs are reduced for the calibration apparatus 1, as only a single calibration signal generator 31 is present. The operation of the calibration apparatus 1 of Fig. 1b is similar to that of Fig. 1a and will be explained with respect to Figure 1a,

In Figure 1a the calibration signal 30, 30-1, 30-2, ..., 30-N is injected into the multi-carrier payload signal 20-1, 20-2, ..., 20-N using a signal injector 40-1, 40-2, ..., 40-N. The signal injector 40-1, 40-2, ..., 40-N may comprise a combiner.

The multi-carrier payload signal 20-1, 20-2, ..., 20-N is forwarded along a transmit portion of the transceiver paths 10-1, 10-2, ..., 10-N. The transceiver paths 10-1, 10-2, ..., 10-N comprise an amplifier 410. The amplifier 410 amplifies the multi-carrier payload signal 20-1, 20-2, ..., 20-N prior to the payload signal 20-1, 20-2, ..., 20-N being relayed by the antenna elements 11-1, 11-2, ..., 11-N terminating the transceiver paths 10-1, 10-2, ..., 10-N.

The transceiver paths 10-1, 10-2, ..., 10-N further comprise a receive portion. A signal received by the antenna element 11-1, 11-2, ..., 11-N is relayed along the receive portion of the at least one transceiver path 10-1, 10-2, ..., 10-N. The separation of the transmit signal and the receive signal is well known in the art and may be achieved by a circulator or a duplex filter or similar.

Figure 1a shows sniffers 145-1, 145-2, ..., 145-N in a vicinity of the antenna elements 11-1, 11-2, ..., 11-N. The calibration apparatus 1 comprises an individual one of the sniffers 145-1, 145-2, ..., 145-N for each one of the antenna elements 11-1, 11-2, ..., 11-N. This may be of interest when calibrating all of the transmit portions of the transceiver paths 10-1, 10-2, ..., 10-N at the same time. One may nevertheless contemplate only providing some of the antenna elements 11-1, 11-2, ..., 11-N with a corresponding one of the sniffers 145-1, 145-2, ..., 145-N. This would of course limit the number of the transmit portions of the transceiver paths 10-1, 10-2, ..., 10-N to be calibrated by the calibration apparatus 1.

The sniffers 145-1, 145-2, ..., 145-N sense a transmit signal 200-1, 200-2, ..., 200-N in the vicinity of the antenna elements 11-1, 11-2, ..., 11-N. The sniffers 145-1, 145-2, ..., 145-N may comprise as a non limiting example a directional coupler. A global transmit signal 200 is sensed if only a single sniffer 145 is present. The global transmit signal 200 is a combination of those out of the transmit signals 200-1, 200-2, ..., 200-N to which the single sniffer 145 is sensitive. With the single sniffer 145 the transmit signals 200-1, 200-2, ..., 200-N are combined "on air". It is of interest to calibrate the transmit portion of all transceiver paths 10-1, 10-2, ..., 10-N at once, even when using the single sniffer 145. Hence the single sniffer 145 should be placed in a position where the single sniffer 145 couples all of the transmit signals 200-1, 200-2, ..., 200-N. This may require the single sniffer 145 to be sufficiently spaced from the antenna elements 11-1, 11-2, ..., 11-N. Therefore the dimensions of the calibration apparatus 1 may increase when using the single sniffer 145.

For combining the transmit signals 200-1, 200-2, ..., 200-N, using the single sniffer 145, care must be taken for the transmit signals 200-1, 200-2, ..., 200-N to be distinguishable between the transceiver paths 10-1, 10-2, ..., 10-N. A phase relation of about 180° between some of the antenna elements 11-1, 11-2, ..., 11-N would almost cancel the transmit signal of those of the antenna elements 11-1, 11-2, ..., 11-N with a phase difference of about 180°. Hence the identification of the calibration signal 30-1, 30-2, ..., 30-N would be very difficult for the antenna elements 11-1, 11-2, ..., 11-N with the phase difference of about 180°. Hence an individual sniffer 145-1, 145-2, ..., 145-N per transceiver path 10-1, 10-2, ..., 10-N is used.

It is possible to select individual ones of the transmit portions of the transceiver paths 10-1, 10-2, ..., 10-N for calibration at a time. The selection of individual ones of the transmit portions of the transceiver paths 10-1, 10-2, ..., 10-N is also possible for the calibration apparatus of Figure 1a. Of course the calibration would become more time consuming when not calibrating the transmit portion of all transceiver paths 10-1, ..., 10-N at the same time.

The transmit signals 200-1, 200-2, ..., 200-N are combined in a combiner 160. The combiner 160 adds the transmit signals 200-1, 200-2, ..., 200-N with a defined phase angle between the transmit signals 200-1, 200-2, ..., 200-N, as known in the art.

The transmit signals 200-1, 200-2, ..., 200-N or the global transmit signal 200 are forwarded to a correlator 150. It is often of interest for the transmit signals 200-1, 200-2, ..., 200-N and the global transmit signal 200 to be converted from analogue to digital. The analogue to digital conversion may be achieved by an analogue to digital converter (ADC - not shown). The ADC may comprise a sigma delta ADC.

The correlator 150 further receives the calibration signals 30, 30-1, 30-2, ..., 30-N from the calibration signal generators 31-1, 31-2, ..., 31-N. The calibration signals 30, 30-1, 30-2, ..., 30-N received by the correlator 150 may further be delayed using delay elements (not shown). The delay elements delay the at least one calibration signal 30, 30-1, 30-2, ..., 30-N for a small amount of time to compensate for the time needed for the payload signal 20-1, 20-2, ..., 20-N to travel along the transmit portion of the transceiver path 10-1, 10-2, ..., 10-N.

The correlator 150 correlates the transmit signals 200-1, 200-2, ..., 200-N or the global transmit signal 200 with the calibration signals 30, 30-1, 30-2,..., 30-N. It is often of interest for the calibration apparatus 1 to correlate an individual one of the transmit signals 200-1, 200-2, ..., 200-N with an individual one of the calibration signals 30, 30-1, 30-2, ..., 30-N. It is often of interest for the calibration of the transmit portion of transceiver paths 10-1, 10-2, ..., 10-N to correlate the calibration signal 30, 30-1, 30-2, ..., 30-N attributed to a selected one of the transceiver paths 10-1, 10-2, ..., 10-N with the transmit signal 200-1, 200-2, ..., 200-N sensed in the vicinity of the antenna element 11-1, 11-2, ..., 11-N terminating the selected transceiver path 10-1, 10-2, ..., 10-N. The correlation may happen for all transceiver paths 10-1, 10-2, ..., 10-N at once. Alternatively the correlation may happen one by one for the transmit portion of the transceiver paths 10-1, 10-2, ..., 10-N.

The correlator 150 is further adapted to auto correlate the calibration signal 30, 30-1, 30-2, ..., 30-N, as will be explained below. The calibration apparatus 1 may further comprise a spectrum former 180. The spectrum former 180 is adapted to symmetrise spectra of the transmit signals 200-1, 200-2, ..., 200-N and the global transmit signal 200. The spectrum former 180 is further adapted to symmetrise the spectra of the calibration signal 30, 30-1, 30-2, ..., 30-N.

The calibration apparatus 1 further comprises a parameter unit 150a to deduce a phase and magnitude difference 800 from the correlator 150. The phase and magnitude difference 800 is then forwarded to the signal conditioner 500. The signal conditioner 500 may impose phase and magnitude changes on the transceiver paths 10-1, 10-2, ..., 10-N. The magnitude and phase changes imposed may be such to provide coherent transmission of the antenna array 10.

The phase and magnitude difference 800 may comprise a phase and magnitude deviation 800T accumulated along the transmit portion of the at least one transceiver path 10-1, 10-2, ..., 10-N.

The calibration apparatus 1 uses the calibration signals 30-1, 30-2, ..., 30-N within a spectral calibration signal envelope 35. It is common in the art to use a substantially white spectrum that covers the whole frequency range for which the antenna array 11 is adapted for relaying the signals. Nevertheless the multi-carrier payload signal 20 is contained within a fragmented spectrum, as for example defined by the communication standard. If the white noise was transmitted over the whole frequency range for calibration purposes, out of band emissions would decrease the performance of the system. More specifically, normal traffic of the signals would be affected by the white noise calibration signal emitted in the out of band regions.

The calibration apparatus 1 provides calibration of the transmit portion of the transceiver path 10-1, 10-2, ..., 10-N without any of the out of band emissions during calibration. Hence the calibration apparatus 1 does not affect the normal traffic as the prior art for the calibration of the transmit portion of the transceiver paths 10-1, 10-2, ..., 10-N.

Typically the multi-carrier payload signal 20 comprises segments 25-0 of negligible payload magnitude. It is often of interest for a segment 35-0 of negligible calibration signal magnitude within the spectral calibration signal envelope 35 to substantially be at an identical frequency position as the segments 25-0 of negligible payload magnitude when calibrating the transmit portion of the transceiver paths 10-1, 10-2, ..., 10-N,. In other words for the calibration of the transmit portion of the transceiver path 10-1, 10-2, ..., 10-N, there is no emission of the antenna array 10 outside the frequency ranges defined for the multi-carrier payload signal 20 by the communication standard during the calibration. The calibration signal 35-1, 35-2, ..., 35-N comprises substantially white spectra across the non-negligible segments of the calibration signal envelope 35. One may think of the calibration signal 30 within the calibration signal envelope 35 to be a white noise spectrum, out of which portions of non-negligible calibration signal magnitude have been selected using filtering techniques. In this case the filtering techniques used suppress those frequencies of the segments 35-0 of negligible calibration signal magnitude. Therefore the calibration signal 30 should therefore not strictly be termed a "white spectrum" as frequencies suppressed by filtering techniques are missing. The term "coloured noise" would be more appropriate.

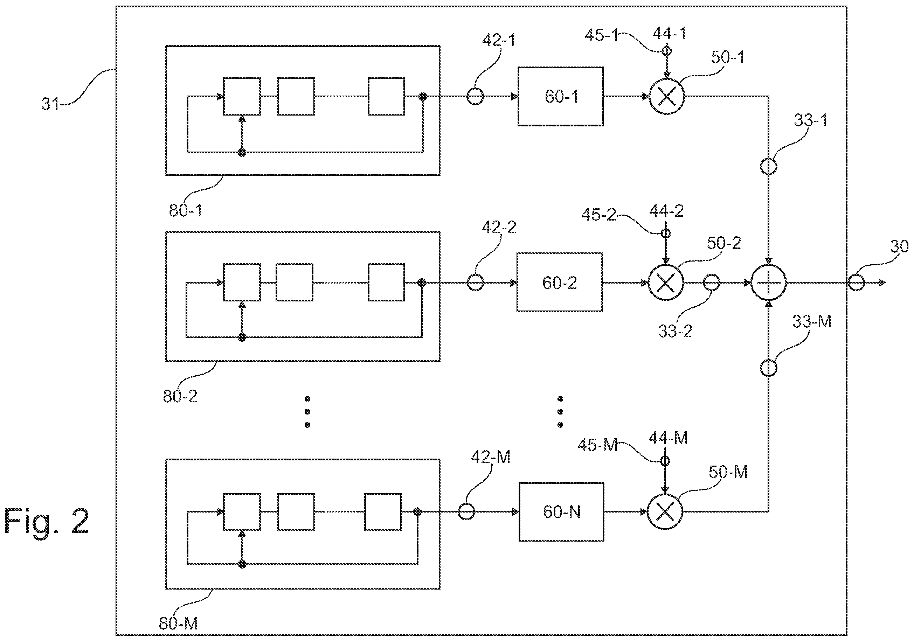

Figure 2 shows a block diagram of the calibration signal generator 31 of the present calibration apparatus 1. For calibration of the antenna array 10 the calibration apparatus 1 may comprise more than only one calibration signal generator 31 providing the calibration signal 30, 30-1, 30-2, ..., 30-N. The calibration signal generator 31 comprises a base calibration signal 42-1, 42-2,..., 42-M, wherein M corresponds to the number of carriers within the multi-carrier payload signal 20. The base band calibration signal 42-1, 42-2,..., 42-M may be provided by a pseudo-noise generator 80-1, 80-2, ..., 80-M or any other source adapted to provide at least one base band calibration signal 42-1, 42-2,..., 42-M. The base band calibration signal 42-1, 42-2, ..., 42-M may comprise, without any limitation, one base band calibration signal for each carrier within the multi-carrier payload signal 20. The calibration signal generator 31 of the calibration apparatus 1 further comprises a filter 60-1, 60-2, ..., 60-M to filter the base band calibration signal 42-1, 42-2, ..., 42-M. The calibration signal generator 31 further comprises a mixer 50-1, 50-2, ..., 50-M to mix the base band calibration signal 42-1, 42-2, ..., 42-M with at least one modulation frequency 45-1, 45-2, ..., 45-M provided by an oscillator 44-1, 44-2,..., 44-M, thus forming portions of the calibration signal 33-1, 33-2, ..., 33-M. The portions of the calibration signal 33-1, 33-2, ..., 33-M are combined to form the calibration signal 30.

According to a further aspect of the calibration apparatus 1 one may contemplate the calibration signal 30 generated by the calibration signal generator 31 to be in the base band. In this case an up conversion would be needed to be inline with Figure 1a or Figure 1b. This up conversion would allow the base band calibration signal to be injected into a base band payload signal. The up conversion of the base band calibration signal and the base band payload signal could be achieved in a single step.

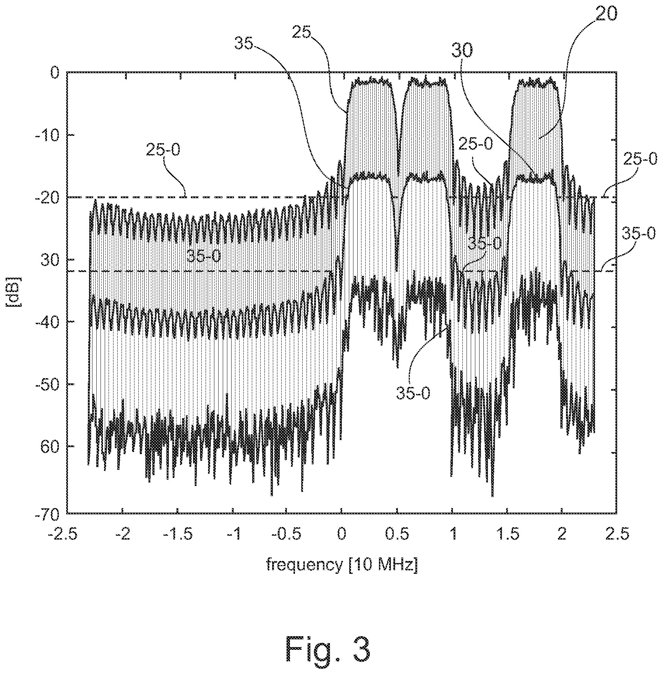

Figure 3 shows an example of the multi-carrier payload signal 20 within the spectral payload envelope 25 on a frequency scale in the horizontal direction and a measure for the magnitude on a logarithmic scale in dB. One can distinguish three frequency bands for the multi-carrier payload signal 20. A first frequency band substantially extends from about 0 MHz to 5 MHz. A second frequency band substantially extends from 5 MHz to 10 MHz. A third frequency band substantially extends from 15 to 20 MHz. At the maximum magnitude for all three frequency bands the signal to noise separation is about 15dB or even greater. The envelope of the multi-carrier payload signal 20 is called the spectral payload envelope 25, as indicated in Figure 3. The spectral payload envelope 25 may be termed fragmented, as the spectral payload envelope 25 typically comprises portions of substantially negligible magnitude. A signal of a magnitude that is 15 dB or more below the maximum magnitude shall be considered substantially negligible with respect to the maximum magnitude. The spectral payload envelope 25 of the multi-carrier payload signal 20 as shown in Figure 3 comprises one segment 25-0 of substantially negligible magnitude between the second frequency band and the third frequency band. The magnitude contributions at negative frequencies are as well considered substantially negligible within Figure 3.

The calibration signal 30 shown in Figure 3 is at substantially lower magnitude than the multi-carrier payload signal 20. This allows for the calibration signal 30 to be injected into the multi-carrier payload signal 20, while substantially not interfering with the multi-carrier payload signal 20 carrying the information (e.g. voice calls) that is communicated between parties.

The spectral calibration signal envelope 35 may comprise segments 35-0 of negligible magnitude at substantially the same frequency bands as the payload signal envelope 25, as shown in the example of Figure 3. Such a choice for the spectral calibration envelope 35 and the spectral payload envelope 25 is of interest when calibrating the transmit portion the transceiver paths 10-1, 10-2, 10-N. The out of band transmission during the calibration of the transmit portion of the transceiver paths 10-1, 10-2, ..., 10-N will not be caused by the calibration signal envelope 35 as shown in Figure 3.

The calibration of the transmit portion of the transceiver paths 10-1, 10-2, ..., 10-N can be carried out during normal operation of the antenna array 10 and hence during the normal operation of the base station without interrupting normal traffic. Therefore a constant monitoring of the coherence of the transmission of the antenna array 10 is conceivable.

Correlation methods are used to identify the calibration signal 30, 30-1, 30-2, ..., 30-N within the multi-carrier payload signal 20-1, 20-2,..., 20-N. Thus the calibration signal 30, 30-1, 30-2, ..., 30-N should have good auto correlation properties in the sense that the auto correlation of the calibration signal 30, 30-1, 30-2, ..., 30-N yields a distinct main peak and only small side lobes. This can be achieved with pseudo noise sequencers 80-1, 80-2, ..., 80-M of several kinds, as shown in Figure 2.

The use of the calibration signal 30, 30-1, 30-2, ..., 30-N within the spectral calibration envelope 35 does somewhat degrade the auto correlation properties of the calibration signal 30, 30-1, 30-2, ..., 30-N. This holds in particular true if the spectral calibration envelope 35 comprises portions 35-0 of negligible magnitude, as discussed with respect to Figure 3.

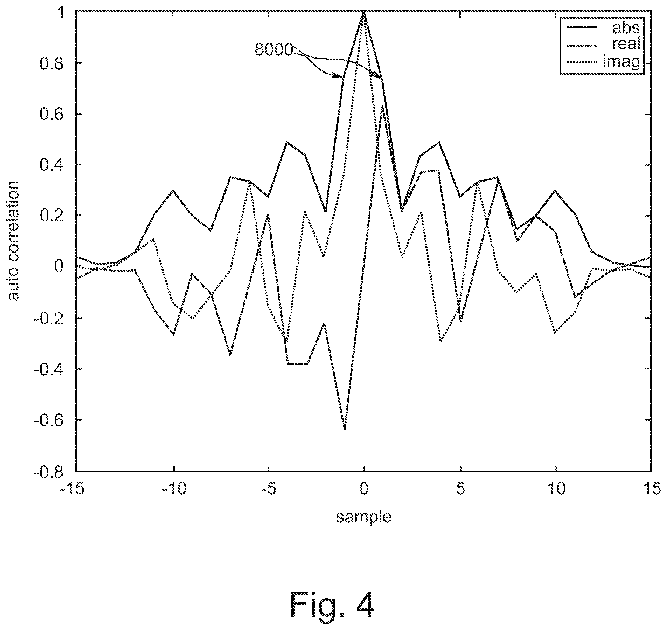

Figure 4 shows the auto correlation for the calibration signal 30, 30-1, 30-2, ..., 30-N comprising the segments 35-0 of negligible magnitude Figure 4 depicts a real component (real), an imaginary component (imag) as well as a magnitude (abs) of both components. The spectral calibration envelope 35 comprising the segments 35-0 of negligible magnitude requires the imaginary components within the calibration signal 30, 30-1, 30-2, ..., 30-N. The imaginary components broaden the main peak of the auto correlation of the calibration signal 30, 30-1, 30-2, ..., 30-N, as can be seen in Figure 4, yielding the side lobes 8000. The broadening of the main peak of the auto correlation of the calibration signal 30, 30-1, 30-2, ..., 30-N decreases the performance of the calibration apparatus 1 using a fragmented calibration signal 30, 30-1, 30-2, ..., 30-N in comparison to the calibration signal 30, 30-1, 30-2, ..., 30-N not comprising the segments 35-0 of negligible magnitude. The loss in performance may be of importance when dealing with a portion of the multi-carrier payload signal 20 of low signal to noise ratio. The side lobes 8000 directly adjacent to the main peak may, especially for the calibration of a portion of the multi-carrier payload signal 20-1, 20-2,..., 20-N with a low signal to noise ratio, lead to significant interference with other noise sources that under better signal to noise conditions can be neglected.

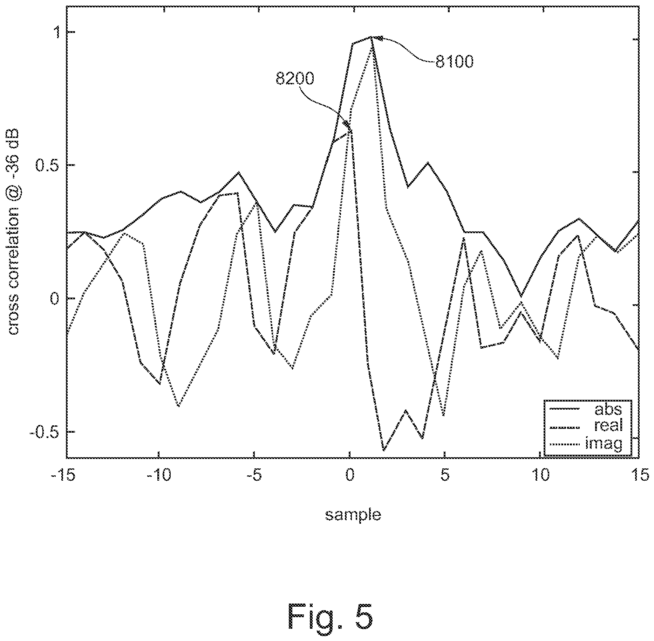

Figure 5 shows an example of a correlation or cross correlation of the calibration signal 30, 30-1, 30-2, ..., 30-N with the at least one transmit signal 200-1, 200-2, ..., 200-N at -36 dB. The broadened main peak due to the side lobes 8000 adjacent to the main peak of the auto correlation (Figure 4) may lead to one of the side lobes 8000 being detected as a main peak 8100, with the true main peak 8200 not being correctly identified.

However, the problem of detecting bogus ones of the side lobes 8000 in correlations of signals caused by imaginary signal components can actually be solved in a simple way by the spectrum former 180 that may be included in the calibration apparatus 1. The spectrum former 180 symmetrises a spectrum of an input signal and may be conveniently described within the frequency domain by a function $S$

$$S : x[k] \mapsto \frac{1}{\sqrt{2}} F^{-1}(F(x[k]) + F(x[n-k]))$$

wherein $x[k]$ denotes a signal of length $n$ and $F$ denotes the discrete Fourier transform.

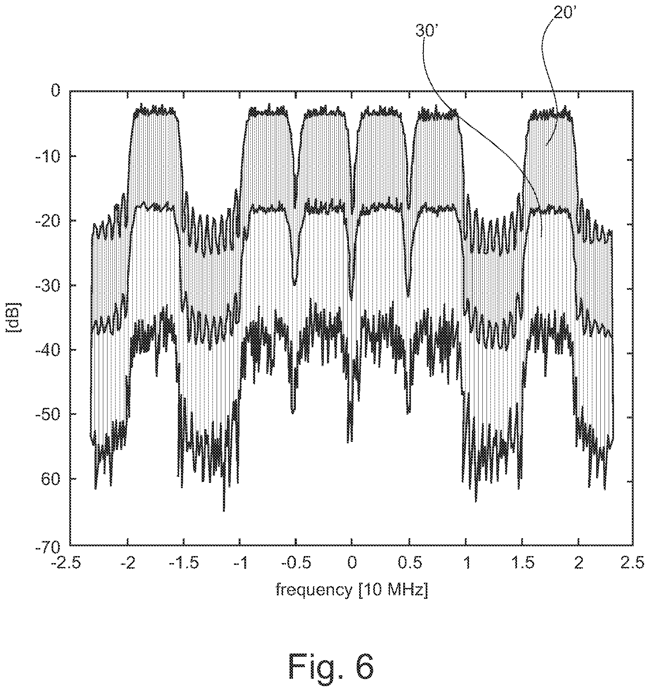

An application of the spectrum former 180 yields a symmetrised spectrum according to the function $S$. The application of the spectrum former 180 to the calibration signal 30 produces a symmetrised calibration signal 30' within a symmetrised multi-carrier payload signal 20', as is depicted in Figure 6.

The spectrum former 180 is not applied to the calibration signal 30, 30-1, 30-2, ..., 30-N prior to injection into the payload signal 20-1, 20-2,..., 20-N, as indicated in Figure 1. The application of the spectrum former 180 prior to the injection of the calibration signal 30, 30-1, 30-2, ..., 30-N into the payload signal 20-1, 20-2,..., 20-N could lead to a calibration signal 30, 30-1, 30-2, ..., 30-N outside the spectral calibration envelope 35. The application of the spectrum former 180 prior to the correlator 150 improves the auto correlation properties of the calibration signal 30, 30-1, 30-2, ..., 30-N as well as the cross correlation between the calibration signal 30, 30-1, 30-2, ..., 30-N and the transmit signals 200-1, 200-2, ..., 200-N.

Figure 6 shows an example of a symmetrised payload signal 20', comprising a symmetrised calibration signal 30'.

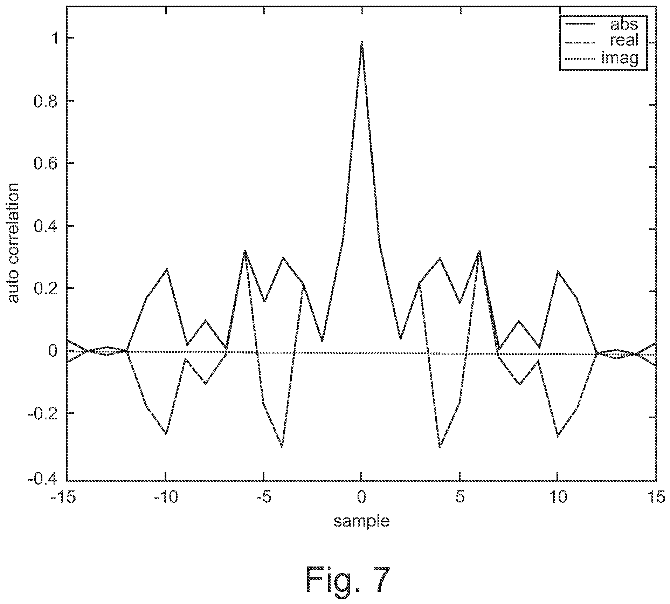

Figure 7 shows the auto correlation for a symmetrised calibration signal 30' for the real component (real), the imaginary component (imag) and the magnitude (abs) of the symmetrised calibration signal 30'. For the auto correlation in case of a symmetrised calibration signal 30' there are no side lobes adjacent to the main peak, but only a clear main peak. Further the imaginary component (imag) of the auto correlation has vanished, i.e. substantially is zero over all samples.

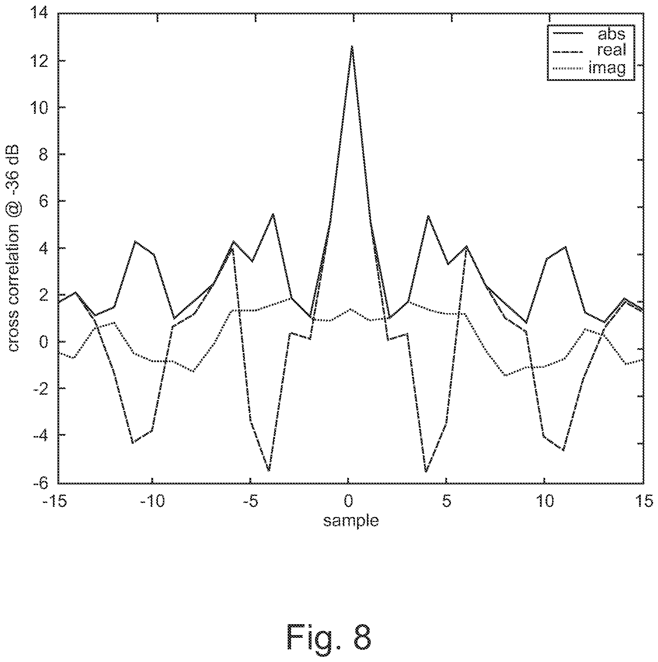

Figure 8 shows an example of the cross correlation at -36 dB for a symmetrised one of the calibration signals 30' and a symmetrised one of the multi-carrier payload signal 20'. Shown are the real component (real), the imaginary component (imag) as well as the magnitude (abs) of the cross correlation at -36 dB. There are no side lobes present adjacent to the main peak; in fact the cross correlation yields a single sharp peak which is of interest for a good performance of the calibration apparatus 1. Hence the spectrum former 180 is of advantage for the calibration apparatus 1, with calibration signal 30 contained within the spectral calibration envelope 35.

Figure 9 shows a further aspect of the calibration apparatus 1 which is of interest for calibration of the receive portion of the transceiver paths 10-1, 10-2, ..., 10-N. The components of the calibration apparatus 1 already present within Figure 1 are given like reference numerals. In Figure 9 the calibration signal 30, 30-1, 30-2, ..., 30-N from the calibration signal generator 31-1, 31-2, ..., 31-N is forwarded to the vicinity of the antenna elements 11-1, 11-2, ..., 11-N to be transmitted as a transmitted calibration signal 300-1, 300-2, ..., 300-N in the vicinity of the antenna elements 11-1, 11-2, ..., 11-N. The sniffers 145 may be used for the transmission.

The calibration signal 30, 30-1, 30-2, ..., 30-N can be made distinguishable for the antenna elements 11-1, 11-2, ..., 11-N, as was the case for the calibration of the transmit portion of the transceiver paths 10-1, 10-2, ..., 10-N. It may be of interest for the transmitted calibration signal 300-1, 300-2, ..., 300-N to be distinguishable between the receive portions of individual ones of the transceiver paths 10-1, 10-2, ..., 10-N in order to use the same signal generator 31-1, 31-2, ..., 31-N for the calibration of the transmit portion and the receive portion of the at least one transceiver path 10-1, 10-2, ..., 10-N.

It is possible to use an identical transmitted calibration signal 300-1, 300-2, ..., 300-N when the receive portion of the transceiver paths 10-1, 10-2, ..., 10-N is to be calibrated by the calibration apparatus 1.

The antenna element 11-1, 11-2, ..., 11-N receives the transmitted calibration signal 300-1, 300-2, ...,

300-N as a received calibration signal 400-1, 400-2, ..., 400-N. The receive portion of the transceiver path 10-1, 10-2, ..., 10-N comprises an amplifier 530 to amplify the received calibration signal 400-1, 400-2, ..., 400-N. The received calibration signal 400-1, 400-2, ..., 400-N is forwarded to the correlator 150. As described before, the calibration apparatus 1 may further comprise the spectrum former 180 adapted to symmetrise the received calibration signals 400-1, 400-2, ..., 400-N and the calibration signal 30, 30-1, 30-2, ..., 30-N. It is advisable not to apply the spectrum former 180 to the transmitted calibration signal 300-1, 300-2, ..., 300-N, in order to keep the transmitted calibration signal 300-1, 300-2, ..., 300-N within the spectral calibration envelope 35.

For the calibration of the transmit portion of the transceiver path 10-1, 10-2, ..., 10-N the correlator 150 correlates the received calibration signal 400-1, 400-2, ..., 400-N with the calibration signal 30, 30-1, 30-2, ..., 30-N. As for the calibration of the transmit portion of the transceiver paths 10-1, 10-2, ..., 10-N, the parameter unit 150a deduces phase and magnitude differences 800 from the correlator 150. For the calibration of the receive portion of the transceiver paths 10-1, 10-2, ..., 10-N it is possible to deduce the phase and magnitude deviations 800R accumulated along the receive portion of the transceiver path 10-1, 10-2, ..., 10-N.

According to a further aspect the calibration apparatus 1 may be adapted to use a different setup for the spectral calibration signal envelope 35 and the payload signal envelope 25 for the calibration of the transmit portion of the transceiver path 10-1, 10-2, ..., 10-N, as discussed with respect to Figure 3 and 6.

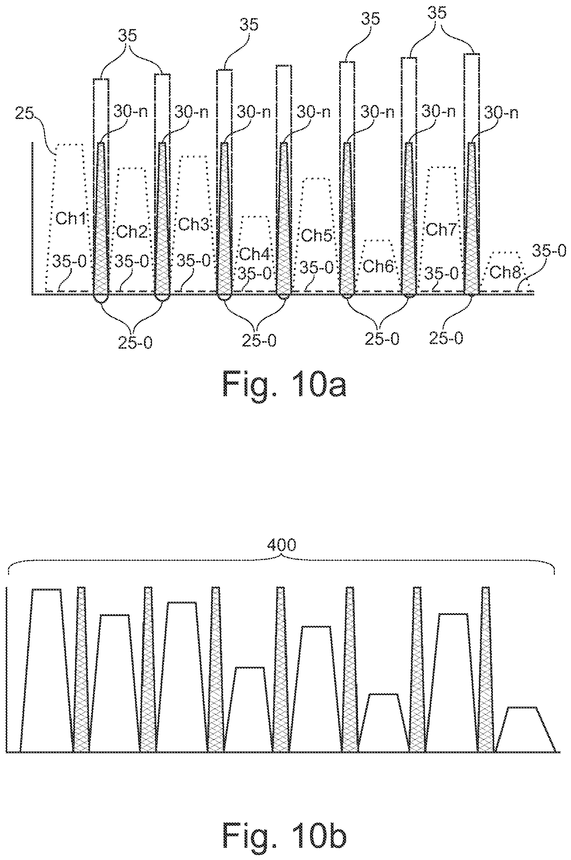

Figure 10a shows the further setup for the spectral payload envelope 25 (i.e. spectrum of payload) and the spectral calibration signal envelope 35 (i.e. spectrum of the calibration signal). In the setup of Figure 10a the spectral calibration signal envelope 35 comprises the segments 35-0 of negligible magnitude within the frequency bands of the carriers comprised within the spectral payload envelope 25. Conversely, the spectral payload envelope 25 comprises the segments 25-0 of negligible magnitude within the frequency bands of the spectral calibration signal envelope 35 of non-vanishing magnitude. With other words the spectral calibration signal envelope 35 is substantially complementary to the spectral payload envelope 25. The bands or segments of non-vanishing magnitude within the spectral calibration signal envelope 35 are chosen as a narrow band calibration signal 30n. The spectral calibration signal envelope 35 shown within Figure 10a produces the out of band emissions. Nevertheless the out of band emissions due to the transmitted calibration signal 300-1, 300-2, ..., 300-N can be of very low magnitude, as the transmitted calibration signal 300-1, 300-2, ..., 300-N are relayed in the vicinity of the antenna elements 11-1, 11-2, ..., 11-N. A low magnitude for the transmitted calibration signal 300-1, 300-2, ..., 300-N will still be sufficient to yield a significant magnitude within the received signals 400-1, 400-2, ...,

400-N in comparison to the magnitude of the multi-carrier payload signal 20-1, 20-2, ..., 20-N received by the antenna elements 11-1, 11-2, ..., 11-N. The transmitted calibration signal 300-1, 300-2, ..., 300-N is of low power and does not affect remote transceivers, for example from a second one of the antenna arrays. Hence the out of band emissions due to the transmitted calibration signal 300-1, 300-2, ..., 300-N are not affecting general telecommunications traffic.

Figure 10b shows an example for the relative magnitude of the transmitted calibration signal 300-1, 300-2, ..., 300-N and the multi-carrier payload signal 20, both comprised within the received signal 400-1, 400-2, ..., 400-N, according to Figure 10a.

For calibration of the transmit portion of the transceiver path 10-1, 10-2, ..., 10-N, one may use narrow band calibration signals next to a non-vanishing segment of the payload envelope 25 for the deduction of phase and magnitude deviations 800R accumulated along the receive portion of the at least one transceiver path 10-1, 10-2, ..., 10-N for the channel.

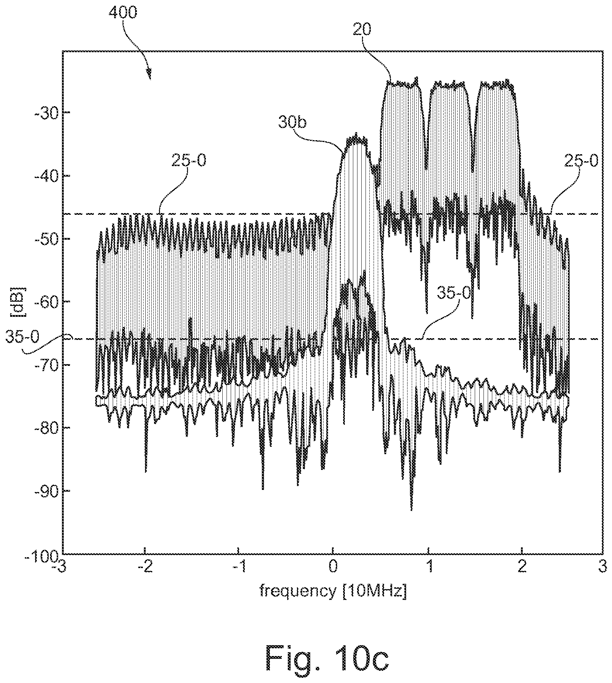

It should be noted that the example of Figure 10a is not limited to the narrow band calibration signals 30n. Figure 10c shows another example of the received signal 400 comprising the multi-carrier payload signal 20 and a broad calibration signal 30b. The broad calibration signal 30b is placed in a frequency band within the segment 25-0 of negligible payload magnitude. The broad calibration signal 30b extends over a frequency range of about 7 MHz. Such a shape of the broad calibration signal 30b is suitable for the calibration of the receive portion of the transceiver paths 10-1, 10-2, ..., 10-N and is, for example, achieved by applying the filtering techniques suppressing all frequencies of the segments 35-0 of negligible payload magnitude for the calibration signal envelope 35. In other words, the same calibration signal generator 31-1, 31-2,..., 31-N may be used as for the calibration of the transmit portion of the transceiver paths 10-1, 10-2, ..., 10-N.

The broad calibration signal 30b of Figure 10c provides a larger number of sample data points in comparison with the narrow band calibration signal 30n of Figure 10a and therefore improves the correlation. In other words the broad calibration signal 30b will be registered with more data points over a frequency axis than the narrow band calibration signal 30n. Therefore one achieves a processing gain when correlating the broad calibration signal 30b. The processing gain will increase a peak height of the auto correlation as well as the cross correlation using the broad calibration signal 30b.

The processing gain may be of interest for situations of low signal to noise ratio. For example, a GSM carrier signal of a third party may be located within the segment 25-0 of negligible payload magnitude. It is possible for the GSM carrier signal (not shown) of the third party to be present within the received signal 400 of Figure 10b. The GSM carrier signal of the third party may be of comparable magnitude with respect to the calibration signal 30. In the situation of low signal to noise ratio between the calibration signal 30 and the GSM carrier signal, use of the broad calibration signal 30b may be of advantage in comparison with the narrow band calibration signal of Figures 10a and 10b. Hence the use of the broad calibration signal 30b makes the calibration of the receive portion of the transceiver paths 10-1, 10-2, ..., 10-N more robust against external interference, such as the third party GSM carrier signal, as mentioned above.

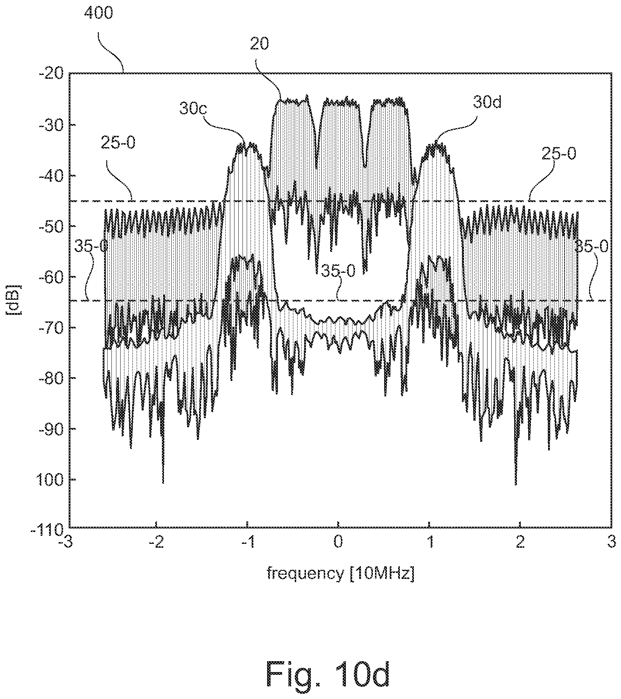

Figure 10d shows yet another example of the broad calibration signal used for calibration of the receive portion of the transceiver paths 10-1, 10-2, ..., 10-N. A first broad calibration signal 30c is shown at a lower frequency than the multi-carrier payload signal 20. A second broad calibration signal 30d is present in the example of Figure 10d at a higher frequency than the multi-carrier payload signal 20. The multi-carrier payload signal 20 is placed between the first broad calibration signal 30c and the second broad calibration signal 30d. In terms of the processing gain the first broad calibration signal 30c and the second broad calibration signal 30d of Figure 10d are advantageous than the broad calibration signal 30b of Figure 10c in situations of low signal to noise ratio between the first broad calibration signal 30c or the second broad calibration signal 30d and the external interference, for example with the third party GSM carrier signal.

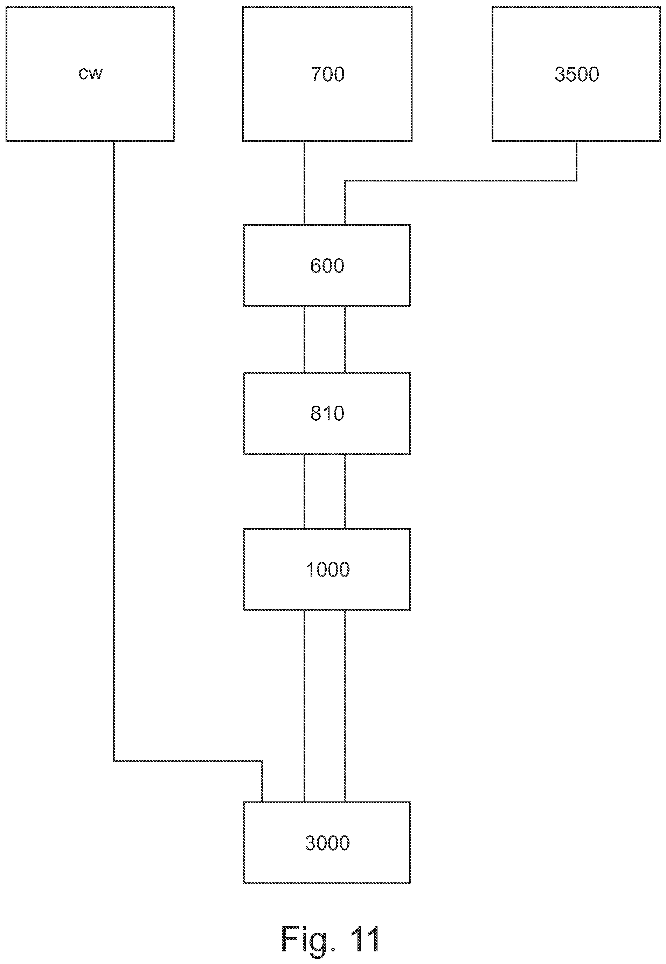

Figure 11 shows a block diagram illustrating a method of generating 3000 the calibration signal 30, 30-1, 30-2, ..., 30-N. It is part of the design of the calibration apparatus 1 to provide the calibration signal 30, 30-1, 30-2, ..., 30-N within the calibration signal envelope 35. The calibration signal envelope 35 may for example be determined by the communication standard used with the antenna array 10. Hence the provision of the calibration signal envelope 35 is not shown within Figure 11.

The calibration signal envelope 35 may comprise at least one segment of negligible calibration signal magnitude 35-0 In case of the calibration apparatus 1 comprising narrow band calibration signals 30 for calibration of the receive portion of the transceiver paths 10-1, 10-2, ..., 10-N it is possible to provide a continuous wave cw signal forming the calibration signal 30, 30-1, 30-2, ..., 30-N. This method 3000 of generating the calibration signal 30, 30-1, 30-2, ..., 30-N is shown in the left portion of Figure 11.

A further aspect of the method 3000 of generating the calibration signal 30, 30-1, 30-2, ..., 30-N is shown in the middle column of Figure 11 starting at step 700 with providing a base band calibration signal 42-1, 42-2, ..., 42-M. As in Figure 2, M denotes the number of carriers present within the multi-carrier payload signal 20. The step 700 of providing the base band calibration signal 42-1, 42-2, ..., 42-M may be achieved for example by providing the oscillator 44-1, 44-2, ..., 44-M. When using the calibration signal of Figure 10a, it may be sufficient for step 700 to provide M-1 of the oscillators 44-1, 44-2, ..., 44-M.

Yet another alternative for the method 3000, 30-1, 30-2, ..., 30-N is depicted in the right column of Figure 11. Here the method 3000 starts with the step 3500 with providing a noise generator 80-1, 80-2, ..., 80-M as the base band calibration signal 42-1, 42-2, ..., 42-M.

Regardless, whether the method 3000 starts with step 700 (middle column of Figure 11) or alternatively with step 3500 (right column); the method 3000 continues with step 600. In step 600 the base band calibration signal 42-1, 42-2, ..., 42-M is filtered. The filtering 600 may be achieved using appropriate band pass filters as known in the art.

Subsequently, a modulation frequency 45-1, 45-2, ..., 45-M is provided in step 810. This may be achieved using the oscillator 44-1, 44-2, ..., 44-M.

In step 1000 each one of the base band calibration signals 42-1, 42-2, ..., 42-M is modulated with a corresponding one of the modulation frequencies 45-1, 45-2, ..., 45-M, to form the calibration signal 30, 30-1, 30-2, ..., 30-N within the spectral calibration signal envelope 35. The modulation is carried out using the signal mixer 50-1, 50-2, ..., 50-M.

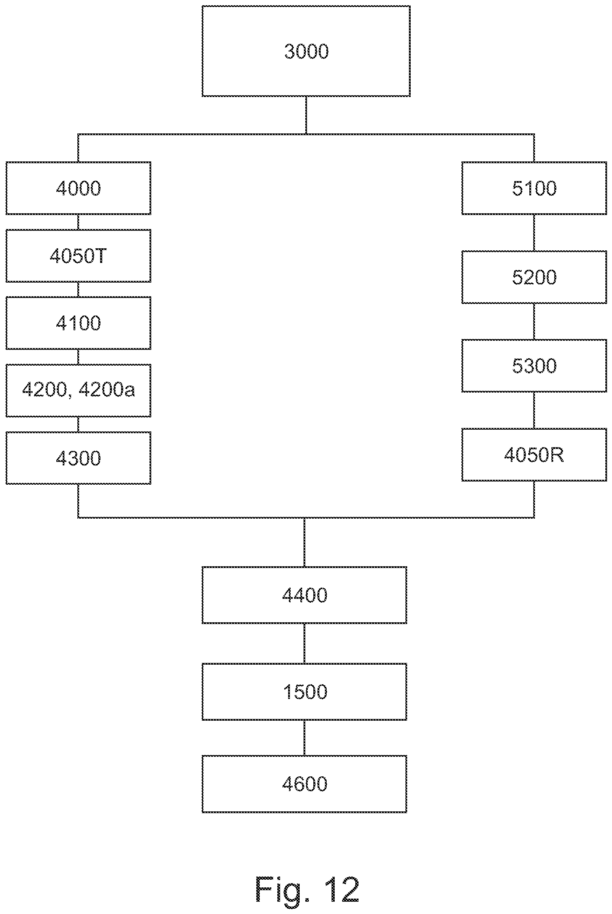

Figure 12 shows a block diagram of the method of calibrating the antenna array 10. A starting point of the method is the provision in step 3000 of the calibration signal 30, 30-1, 30-2, ..., 30-N, as explained in Figure 11. The block diagram of Figure 12 forks out into two branches subsequent to the generation 3000.

The left side of the Figure 12 shows the method for calibrating the transmit portion of the transceiver path 10-1, 10-2, ..., 10-N. The right side of Figure 12 shows the method for calibrating the receive portion of the transceiver path 10-1, 10-2, ..., 10-N.

The calibration of the transmit portion on the left side of Figure 12 will first be discussed: In step 4000 the calibration signal 30, 30-1, 30-2, ..., 30-N is injected into the multi-carrier payload signal 20. The injection is carried out using the injector 40-1, 40-2, ..., 40-N. Typically, the calibration signal 30, 30-1, 30-2, ..., 30-N is of substantially lower magnitude than the multi-carrier payload signal 20. In step 4050T the multi-carrier payload signal 20 is relayed via the transmit portion of the transceiver path 10-1, 10-2, ..., 10-N. The step 4050T relays the calibration signal 30, 30-1, 30-2, ..., 30-N along the transmit portion of the transceiver path 10-1, 10-2, ..., 10-N.

A step 4100 comprises amplification of the multi-carrier payload signal 20 and the calibration signal 30, 30-1, 30-2, ..., 30-N travelling along the transmit portion of the transceiver paths 10-1, 10-2, ..., 10-N. An amplifier 530 (see Figures 1 and 9) is typically used for amplification. After the amplification the calibration signal 30, 30-1, 30-2, ..., 30-N is relayed together with the multi-carrier payload signal 20 by the antenna element 11-1, 11-2, ..., 11-N.

To identify changes the multi-carrier payload signal 20-1, 20-2, ..., 20-N and the calibration signal 30, 30-1, 30-2, ..., 30-N experience when travelling along the transmit portion of the transceiver paths 10-1, 10-2, ...,

10-N it is part of the transmit calibration to sense a small portion of the transmit signal 200, 200-1, 200-2, ..., 200-N.

Steps 4200 and 4200a sense the transmit signal 200, 200-1, 200-2, ..., 200- N (see Figures 1a and b). One option denoted by step 4200a is to sense the global transmit signal 200 in the vicinity of the antenna elements 11-1, 11-2, ..., 11-N. This is of interest, when the single sniffer 145 is used for sensing 4200a the global transmit signal 200. The global transmit signal 200 will typically comprise a combination of the plurality of transmit signals 200-1, 200-2, ..., 200-N transmitted by the at least one transceiver path 10-1, 10-2, ..., 10-N of the antenna array 10. Hence the next step 4300 of combining the transmit signals 200-1, 200-2, ..., 200-N is achieved on air, with only the single sniffer 145 present. As mentioned before, a drawback of the step 4300 being achieved on air is that a point for global sensing 4200a needs to be sufficiently spaced from the antenna array 10 in order to be suitable for the global sensing 4200 of all the transmit signals 200-1, 200-2, ..., 200-N as the global transmit signal 200. Therefore the global sensing increases the overall dimensions of the antenna array 10.

An alternative of step 4200 is labelled 4200a. In a step 4200a the transmit signals 200-1, 200-2, ..., 200-N are sensed in the vicinity of each antenna element 11-1, 11-2, ..., 11-N (Figures 1a and 1b). In other words there is one of the sniffers 145-1, 145-2, ..., 145-N arranged in close vicinity of each one of the antenna elements 11-1, 11-2, ..., 11-N.

Subsequently in a step 4300 the transmit signals 200-1, 200-2, ..., 200-N are combined. This can for example be achieved using the combiner 160. Step 4300 is the last step before both branches of Figure 12 merge again.

The method for calibrating the receive portion of the transceiver paths 10-1, 10-2, ..., 10-N, as shown on right side of the Figure 12 is subsequent to step 3000 followed by a step 5100. For the calibration of the receive portion of the transceiver paths 10-1, 10-2, ..., 10-N the transmitted calibration signal 300-1, 300-2, ..., 300-N (see Figure 9) is transmitted in the vicinity of the antenna elements 11-1, 11-2, ..., 11-N. The magnitude of the transmitted calibration signal 300-1, 300-2, ..., 300-N can be very low as the transmission happens in the vicinity of the antenna elements 11-1, 11-2, ..., 11-N. The magnitude of the transmitted calibration signal 300-1, 300-2, ..., 300-N should be carefully selected, in order to not get the amplifiers 530 into clipping or out of their range of linear amplification.

It is possible for the transmission of the transmitted calibration signal 300-1, 300-2, ..., 300-N to transmit a single transmitted calibration signal 300 in the vicinity of the antenna elements 11-1, 11-2, ..., 11-N in step 5100 as shown in Figure 9. A point of transmission for the single transmitted calibration signal 300 typically needs to be sufficiently spaced from the antenna array 10 in order to be suitable for the single transmitted calibration signal 300 to be received by the antenna elements 11-1, 11-2, ..., 11-N. This would typically increase the overall dimensions of the antenna array 10.

A step 5200 depicts receiving the transmitted calibration signal 300-1, 300-2, ..., 300-N as the received signal 400-1, 400-2, ..., 400-N (see Figure 9). During normal operation the received signal 400-1, 400-2, ..., 400-N comprises a received payload signal 20 together with the transmitted calibration signal 400-1, 400-2, ..., 400-N.

Subsequently in a step 5300 the received signal 400-1, 400-2, ..., 400-N is amplified. This typically is achieved using the amplifiers 530 within the receive portion of the transceiver path 10-1, 10-2, ..., 10-N as shown in Figures 1 and 9.

In a step 4050R the transmit signal 400-1, 400-2, ..., 400-N amplified at the step 5300 is relayed along the receive portions of the transceiver paths 10-1, 10-2, ..., 10-N. The relaying along the receive portions of the transceiver paths 10-1, 10-2, ..., 10-N allows the amplified transmit signal 400-1, 400-2, ..., 400-N to accumulate the phase and changes 800R along the receive portion of the transceiver path 10-1, 10-2, ..., 10-N. After the step 4050R the two branches merge in Figure 12. In other words, the following steps of the calibration method are carried out for calibration of the transmit portion and the receive portion of the transceiver paths 10-1, 10-2, ..., 10-N.

The steps 4300 and 4050R are both followed by step a 4400. The step 4400 comprises spectrum forming, typically using the spectrum former 180. The spectrum forming may be applied to any of the calibration signals 30, 30-1, 30-2, ..., 30-N, the global transmit signal 200, the transmit signals 200-1, 200-2, ..., 200-N and the received signals 400-1, 400-2, ..., 400-N, to symmetrise their respective spectra. The spectrum former 180 may yield within the step 4400 any of a symmetrised calibration signal 30', 30-1', 30-2', ..., 30-N', a symmetrised global transmit signal 200', symmetrised transmit signals 200-1', 200-2', ..., 200-N' and symmetrised received signals 400-1', 400-2', ..., 400-N'. As mentioned before, it is advisable for the spectrum forming to be carried out immediately before correlating signals. The spectrum forming prior to correlating improves the correlation properties of the calibration signal 30, 30-1, 30-2, ..., 30-N, as discussed with respect to Figures 7 and 8.

In step 1500 the correlator 150 correlates the symmetrised calibration signal 30', 30-1', 30-2', ..., 30-N' with the symmetrised calibration signal 30', 30-1', 30-2', ..., 30-N', thereby yielding an auto correlation of the symmetrised calibration signal 30', 30-1', 30-2', ..., 30-N'. The symmetrised global transmit signal 200' or the symmetrised transmit signals 200-1', 200-2', ..., 200-N' are correlated with the symmetrised calibration signal 30', 30-1', 30-2', ..., 30-N' in step 1500 when calibrating the transmit portion of the transceiver paths 10-1, 10-2, ..., 10-N. The symmetrised received signal 400-1', 400-2', ..., 400-N' is correlated with the symmetrised calibration signal 30', 30-1', 30-2', ..., 30-N' for calibrating the receive portion the transceiver paths.

A step 4600 is the last step of Figure 12. In the step 4600 the transmit phase and magnitude deviation 800T (see Figures 1a and 1b) accumulated along the transmit portion of the transceiver paths 11-1, 11-2, ..., 11-N is deduced from the correlator 150 by the parameter unit 150a. The transmit phase and magnitude deviation 800T is typically of interest when calibrating the transmit portion of the transceiver paths 10-1, 10-2, ..., 10-N. For a coherent transmission of the antenna array 10 it is necessary to know the transmit phase and magnitude deviation 800T, to allow the signal conditioner 500 to compensate for the transmit phase and magnitude deviation 800T within the transmit portion of the transceiver path 10-1, 10-2, ..., 10-N.

The step 4600 may further comprise deduction of the receive phase and magnitude deviation 800R (see Figure 9) accumulated along the receive portion of the transceiver paths for the transceiver paths 10-1, 10-2, ..., 10-N. For a coherent reception of the antenna array 10 it is necessary to know the receive phase and magnitude deviation 800R, to allow the signal conditioner 500 to compensate for the receive phase and magnitude deviation 800R within the receive portion of the at least one transceiver path 10-1, 10-2, ..., 10-N. This is normally achieved by signal conditioning on the received signal 400-1, 400-2, ..., 400-N.

The invention further relates to an antenna array 10 comprising the transceiver paths 10-1, 10-2, ..., 10-N. The transceiver paths 10-1, 10-1, ..., 10-N are terminated by one of the antenna elements 11-1, 11-2, ..., 11-N. The antenna array 10 comprises the calibration apparatus 1. The signal conditioner 500 is further adapted to impose phase and magnitude changes to each one of the transceiver paths 10-1, 10-2, ..., 10-N. The phase and magnitude changes imposed by the signal conditioner 500 may comprise the transmit phase and magnitude deviations 800T and the receive phase and magnitude deviations 800R. To make the accumulated phase and magnitude changes known to the signal conditioner 500, they are fed to the signal conditioner 500 as shown in Figures 1 and 9.

The signal conditioner 500 can compensate for the transmit magnitude and phase deviations 800T accumulated along the transmit portion of the at least one transceiver path 10-1, 10-2, ..., 10-N. Hence the antenna array 10 is adapted for the calibration of the transmit portion of the at least one transceiver path 10-1, 10-2, ..., 10-N.

The signal conditioner 500 can further compensate for the receive magnitude and phase deviations 800R accumulated along the transmit portion of the at least one transceiver path 10-1, 10-2, ..., 10-N. Hence the antenna array 10 is adapted for the calibration of the receive portion of the transceiver paths 10-1, 10-2, ..., 10-N.

It will be appreciated by a person skilled in the art that compensation for the magnitude and phase deviations 800T, 800R allow for the transmission and/or reception of the antenna array 10 to be of a defined phase and magnitude relation between at least pairs out of the transceiver paths 10-1, 10-2, ..., 10-N. Typically one is of course interested in a coherence across all of the transceiver paths 10-1, 10-2, ..., 10-N. The signal conditioner 500 may for example comprise a digital signal processor (DSP).

A person skilled in the art will readily appreciate that the signal conditioner 500 will further be adapted to impose additional phase and magnitude differences between at least a pair of the transceiver paths 10-1, 10-2, ..., 10-N. This may be of interest for techniques comprising: beam steering, beam forming, down tilting, beam diversity and direction of arrival (DOA) detection.

While various embodiments of the present invention have been described above, it should be understood that they have been presented by way of example, and not limitation. It will be apparent to persons skilled in the relevant arts that various changes in form and detail can be made therein without departing from the scope of the invention. In addition to using hardware (e.g., within or coupled to a Central Processing Unit ("CPU"), microprocessor, microcontroller, digital signal processor, processor core, System on Chip ("SOC"), or any other device), implementations may also be embodied in software (e.g., computer readable code, program code, and/or instructions disposed in any form, such as source, object or machine language) disposed, for example, in a computer usable (e.g., readable) medium configured to store the software. Such software can enable, for example, the function, fabrication, modelling, simulation, description and/or testing of the apparatus and methods described herein. For example, this can be accomplished through the use of general programming languages (e.g., C, C++), hardware description languages (HDL) including Verilog HDL, VHDL, and so on, or other available programs. Such software can be disposed in any known computer usable medium such as semiconductor, magnetic disk, or optical disc (e.g., CD-ROM, DVD-ROM, etc.). The software can also be disposed as a computer data signal embodied in a computer usable (e.g., readable) transmission medium (e.g., carrier wave or any other medium including digital, optical, or analog-based medium). Embodiments of the present invention may include methods of providing the apparatus described herein by providing software describing the apparatus and subsequently transmitting the software as a computer data signal over a communication network including the Internet and intranets.

It is understood that the apparatus and method described herein may be included in a semiconductor intellectual property core, such as a microprocessor core (e.g., embodied in HDL) and transformed to hardware in the production of integrated circuits. Additionally, the apparatus and methods described herein may be embodied as a combination of hardware and software. Thus, the present invention should not be limited by any of the above-described exemplary embodiments, but should be defined only in accordance with the following claims.

**Claims**

1. A calibration apparatus (1) for an antenna array (10) comprising:

    a calibration signal generator (31, 31-1, ..., 31-N) configured to generate at least one calibration signal (30, 30-1, 30-2,...,30-N) within a spectral calibration signal envelope (35), wherein the at least one calibration signal (30;30-1,30-2,...,30-N) is adapted to calibrate the antenna array (10), the antenna array (10) comprising at least one transceiver path (10-1, 10-2,..., 10-N) being terminated by an antenna element (11-1, 11-2,... 11-N);
    the antenna element (11-1, 11-2,...,11-N) relaying a multi-carrier payload signal (20) within a spectral payload envelope (25) and the calibration signal being at substantially lower magnitude than the multi-carrier payload signal to not interfere therewith, wherein the spectral payload envelope (25) covers the same frequency range as the spectral calibration signal envelope (35) and wherein the spectral calibration signal envelope (35) comprises at least one segment of negligible calibration signal magnitude (35-0), the negligible calibration signal magnitude being at least 15 dB below the maximum amplitude.

2. The calibration apparatus (1) according to claim 1, further comprising a spectrum former (180) adapted to symmetrise spectra of at least one out of the at least one calibration signal (30, 30-1, 30-2, ..., 30-N), the payload signal (20), the received signals (400-1, 400-2, .... 400-N), the plurality of transmit signals (200-1,200-2,..., 200-N) and the global transmit signal (200).

3. The calibration apparatus (1) according to claim 1 or 2, wherein the spectral payload envelope (25) comprises at least one segment of negligible payload magnitude (25-0).

4. The calibration apparatus (1) according to any one of the above claims, wherein the at least one calibration signal generator (31-1, ..., 31-N) generates at least one continuous wave signal as the at least one calibration signal (30, 30-1, 30-2,...,30-N) at frequencies of non-negligible magnitude within the at least one calibration signal envelope (35).

5. The calibration apparatus (1) according to any one of the above claims, wherein the at least one calibration signal generator (31, 31-1, 31-2, ..., 31-N) further comprises: at least one filter (60-1, 60-2, ..., 60-M) to filter at least one base band calibration signal (42-1, 42-2 42-M);
at least one oscillator (44-1, 44-2,..., 44-M) providing at least one modulation frequency (45-1, 45-2, 45-M) adapted to modulate the at least one base band calibration signal (42-1, 42-2,..., 42-M) from a base band to provide the at least one calibration signal (30, 30-1, 30-2,...,30-N) of non-negligible amplitude within the spectral calibration signal envelope (35).

6. The calibration apparatus (1) according to claim 5, wherein the at least one calibration signal generator (31, 31-1, 31-2, ..., 31-N) further comprises a signal mixer (50-1, 50-2, ..., 50-M) adapted to mix the at least one modulation frequency (45-1, 45-2, ..., 45-M) with a respective one of the at least one base band calibration signal (42-1, 42-2,..., 42-M).

7. The calibration apparatus (1) according to any one of the above claims, wherein the at least one calibration signal generator (31, 31-1, 31-2,..., 31-N) comprises at least one pseudo noise sequencer (80-1, 80-2,...,80-M).

8. The calibration apparatus (1) according to any one of the above claims, further comprising a calibration signal injector (40-1, 40-2,...,40-N) adapted to inject the at least one calibration signal (30, 30-1, 30-2,..., 30-N) into the multi-carrier payload signal (20); and an amplifier (410) adapted to amplify the multi-carrier payload signal (20).

9. The calibration apparatus (1) according to any one of the above claims, further comprising at least one sniffer (145; 145-1, 145-2,..., 145-N) for sensing a global transmit signal (200) or a plurality of transmit signals (200-1, 200-2, ..., 200-N) in the vicinity, of the antenna elements (11-1, 11-2,..., 11-N).

10. The calibration apparatus (1) according to any one of the above claims, further comprising a correlator (150) adapted for correlating at least pairs out of the at least one calibration signal (30, 30-1, 30-2,..., 30-N), the global transmit signal (200), the plurality of transmit signals (200-1, 200-2 200-N) and a received signal (400-1,400-2 400-N).

11. The calibration apparatus (1) according to any one of the above claims, further comprising a parameter unit (150a) adapted to deduce a phase and magnitude difference (800) from the correlator (150).

12. A method for generating (3000) at least one calibration signal (30, 30-1, 30-2, ..., 30-N) for an antenna array (10) comprising:

    - providing a spectral calibration signal envelope (35) comprising at least one segment of negligible calibration signal magnitude (25-0), the negligible calibration signal magnitude being at least 15 dB below the maximum amplitude;
- providing at least one calibration signal (30, 30-1, 30-2,..., 30-N) within a spectral calibration signal envelope (35), wherein the at least one calibration signal (30, 30-1, 30-2,..., 30-N) is adapted for calibrating the antenna array and is at substantially lower magnitude than the multi-carrier payload signal to not interfere therewith, the antenna array (10) relaying a multi-carrier payload signal (20) within a spectral payload envelope (25), wherein the spectral payload envelope (25) covers the same frequency range as the spectral calibration signal envelope (35).

13. The method according to claim 12, further comprising:

- providing at least one continuous wave signal forming the at least one calibration signal (30, 30-1, 30-2,...,30-N) at frequencies of non-negligible magnitude within the spectral calibration signal envelope (35).

14. The method according to any one of claims 12 or 13, further comprising:

- providing (700) at least one base band calibration signal (42-1, 42-2, ..., 42-M);
- filtering (600) the at least one base band calibration signal (42-1, 42-2,..., 42-M);
- providing (810) at least one modulation frequency (45-1, 45-2, ..., 45-M); - modulating (1000) the at least one base band calibration signal (42-1, 42-2,..., 42-M) with a respective one out of the at least one modulation frequency (45-1, 45-2, ..., 45-M) to form the at least one calibration signal (30, 30-1, 30-2,..., 30-N) within the spectral calibration signal envelope (35).

15. A computer program product embodied on a computer-readable medium and comprising executable instructions that enable a processor to carry out a method according to claim 12.

16. Use of the calibration apparatus (1) of claim 1 for the calibration of an antenna array (10).

**Patentansprüche**

1. Kalibrierungsapparat (1) für eine Antennengruppe (10), umfassend:

ein Kalibrierungssignalgenerator (31, 31-1, ..., 31-N), dazu konfiguriert zumindest ein Kalibrierungssignal (30, 30-1, 30-2, ..., 30-N) im Inneren einer Spektralkalibrierungssignalhüllkurve (35) zu generieren, wobei das zumindest eine Kalibrierungssignal (30, 30-1, 30-2, ..., 30-N) dazu geeignet ist die Antennengruppe (10) zu kalibrieren, wobei die Antennengruppe (10) zumindest einen Sender-Empfänger-Pfad (10-1, 10-2, ..., 10-N) umfasst, welcher durch ein Antennenelement (11-1, 11-2, ..., 11-N) abgeschlossen wird; und
wobei das Antennenelement (11-1, 11-2, ..., 11-N) ein Multiträgernutzsignal (20) in einer Spektralnutzhüllkurve (25) weiterleitet, wobei das Kalibrierungssignal eine wesentlich geringere Größe als das Multiträgernutzsignal aufweist, um dieses nicht zu stören, wobei die Spektralnutzhüllkurve (25) den gleichen Frequenzbereich abdeckt, als die Spektralkalibrierungssignalhüllkurve (35) und wobei die Spektralkalibrierungssignalhüllkurve (35) zumindest ein Segment geringfügiger Kalibrierungssignalgröße (35-0) umfasst, wobei die geringfügige Kalibrierungssignalgröße mindestens 15 dB unten der maximalen Größe liegt.

2. Kalibrierungsapparat (1) nach Anspruch 1, weiterhin umfassend einen Spektrumformer (180), welcher dazu geeignet ist, Spektrum zu symmetrisieren von zumindest einem von dem zumindest einen Kalibrierungssignal (30, 30-1, 30-2, ..., 30-N), dem Nutzsignal (20), den empfangenen Signalen (400-1, 400-2, ..., 400-N), der Vielzahl von übermittelten Signalen (200-1, 200-2, ..., 200-N) und des global übertragenen Signal (200).

3. Kalibrierungsapparat (1) nach Anspruch 1 oder 2, wobei die Spektralnutzhüllkurve (25) zumindest ein Segment von geringfügiger Nutzgröße (25-0) umfasst.

4. Kalibrierungsapparat (1) nach einem der vorangegangenen Ansprüche, wobei der zumindest eine Kalibrierungssignalgenerator (31, 31-1, ..., 31-N) zumindest ein Dauerstrichsignal als das zumindest eine Kalibrierungssignal (30, 30-1, 30-2, ..., 30-N) generiert, bei Frequenzen mit nicht geringfügiger Größe innerhalb der Spektralkalibrierungssignalhüllkurve (35).

5. Kalibrierungsapparat (1) nach einem der vorangegangenen Ansprüche, wobei der zumindest eine Kalibrierungssignalgenerator (31, 31-1, ..., 31-N) weiterhin umfasst:

zumindest einen Filter (60-1, 60-2, ..., 60-M), um zumindest ein Basisbandkalibrierungssignal (42-1, 42-2, ..., 42-M) zu filtern;
zumindest einen Oszillator (44-1, 44-2, ..., 44-M), welcher zumindest eine Modulationsfrequenz (45-1, 45-2, 45-M) bereitstellt, welche dazu geeignet ist, das zumindest eine Basisbandkalibrierungssignal (42-1, 42-2, ..., 42-M) von einem Basisband zu modulieren, um das zumindest eine Kalibrierungssignal (30, 30-1, 30-2, ..., 30-N) von nicht geringfügiger Größe innerhalb der Spektralkalibrierungssignalhüllkurve (35) bereitzustellen.

6.  Kalibrierungsapparat (1) nach Anspruch 5, wobei der zumindest eine Kalibrierungssignalgenerator (31, 31-1, ..., 31-N) weiterhin einen Signalmixer (50-1, 50-2, ..., 50-M) umfasst, welcher dazu geeignet ist, die zumindest eine Modulationsfrequenz (45-1, 45-2, ..., 45-M) mit einem jeweiligen von den Basisbandkalibrierungssignalen (42-1, 42-2, ..., 42-M) zu mischen.

7.  Kalibrierungsapparat (1) nach einem der vorangegangenen Ansprüche, wobei der zumindest eine Kalibrierungssignalgenerator (31, 31-1, ..., 31-N) einen Pseudozufallsrauschensequenzer (80-1, 80-2, ..., 80-M) umfasst.

8.  Kalibrierungsapparat (1) nach einem der vorangegangenen Ansprüche, weiterhin umfassend einen Kalibrierungssignalinjektor (40-1, 40-2, ..., 40-N), zum Injizieren des zumindest einen Kalibrierungssignals (30, 30-1, 30-2, ..., 30-N) in das Multiträgernutzsignal (20); und
einen Verstärker (410), welcher dazu geeignet ist, das Multiträgernutzsignal (20) zu verstärken.

9.  Kalibrierungsapparat (1) nach einem der vorangegangenen Ansprüche, weiterhin umfassend zumindest einen Sniffer (145, 145-1, 145-2, ..., 145-N) zum Detektieren eines global übertragenen Signals (200) oder einer Vielzahl von übertragenen Signalen (200-1, 200-2, ..., 200-N) in der Nähe der Antennenelemente (11-1, 11-2, ..., 11-N).

10. Kalibrierungsapparat (1) nach einem der vorangegangenen Ansprüche, weiterhin umfassend einen Korrelator (150), welcher dazu geeignet ist zumindest Paare aus dem zumindest einen Kalibrierungssignal (30, 30-1, 30-2, ..., 30-N), dem global übertragenen Signal (200), der Vielzahl von übertragenen Signalen (200-1, 200-2, ..., 200-N) und einem empfangenen Signal (400-1, 400-2, ..., 400-N) zu korrelieren.

11. Kalibrierungsapparat (1) nach einem der vorangegangenen Ansprüche, weiterhin umfassend eine Parametereinheit (150a), welche dazu geeignet ist, einen Phasen- und Größenunterschied (800) des Korrelators (150) zu deduzieren.

12. Verfahren zum Generieren (3000) von zumindest einem Kalibrierungssignal (30, 30-1, 30-2, ..., 30-N) für eine Antennengruppe (10) umfassend:

    - Bereitstellen einer Spektralkalibrierungssignalhüllkurve (35) umfassend zumindest ein Segment von geringfügiger Kalibrierungssignalgröße (25-0), wobei die geringfügige Kalibrierungssignalgröße mindestens 15 dB unten der maximalen Größe liegt;
    - Bereitstellen von zumindest einem Kalibrierungssignal (30, 30-1, 30-2, ..., 30-N) im Inneren einer Spektralkalibrierungssignalhüllkurve (35), wobei das zumindest eine Kalibrierungssignal (30, 30-1, 30-2, ..., 30-N) dazu geeignet ist die Antennengruppe (10) zu kalibrieren, wobei das Kalibrierungssignal eine wesentlich geringere Größe als das Multiträgernutzsignal aufweist, um dieses nicht zu stören, und

    wobei die Antennengruppe (10) ein Multiträgernutzsignal (20) in einer Spektralnutzhüllkurve (25) weiterleitet, wobei die Spektralnutzhüllkurve (25) den gleichen Frequenzbereich abdeckt, als die Spektralkalibrierungssignalhüllkurve (35).

13. Verfahren nach Anspruch 12, weiterhin umfassend:

    - Bereitstellen von einem Dauerstrichsignal, bildend das zumindest eine Kalibrierungssignal (30, 30-1, 30-2, ..., 30-N) bei Frequenzen mit nicht geringfügiger Größe im Inneren der Spektralkalibrierungssignalhüllkurve (35).

14. Verfahren nach Ansprüchen 12 oder 13, weiterhin umfassend:

    - Bereitstellen (700) von zumindest einem Basisbandkalibrierungssignal (42-1, 42-2, ..., 42-M);
    - Filtern (600) des zumindest einen Basisbandkalibrierungssignals (42-1, 42-2, ..., 42-M);
    - Bereitstellen (810) von zumindest einer Modulationsfrequenz (45-1, 45-2, ..., 45-M);
    - Modulation (1000) des zumindest einen Basisbandkalibrierungssignals (42-1, 42-2, ..., 42-M) mit einer jeweiligen aus der zumindest einen Modulationsfrequenz (45-1, 45-2, ..., 45-M), um das zumindest eine Kalibrierungssignal (30, 30-1, 30-2, ..., 30-N) im Inneren der Spektralkalibrierungssignalhüllkurve (35) zu bilden.

15. Computerprogramm auf einem computerlesbaren Medium und umfassend ausführbare Anweisungen, welche es einem Prozessor ermöglichen, das Verfahren nach Anspruch 12 auszuführen.

16. Verwendung des Kalibrierungsapparats (1) nach Anspruch 1 zur Kalibrierung der Antennengruppe (10).

## Revendications

1. Appareil de calibration (1) pour un réseau d'antenne (10), comprenant:

   un générateur de signal de calibration (31, 31-1, ..., 31-N), configuré pour engendrer au moins un signal de calibration (30, 30-1, 30-2, ..., 30-N) à l'intérieur d'une enveloppe de signal de calibration spectrale (35), dans lequel le au moins un signal de calibration (30, 30-1, 30-2, ..., 30-N) est adapté pour calibrer le réseau d'antenne (10), le réseau d'antenne (10) comprenant au moins un chemin émetteur-récepteur (10-1, 10-2, ..., 10-N) terminé par un élément d'antenne (11-1, 11-2, ..., 11-N) ;
   l'élément d'antenne (11-1, 11-2, ..., 11-N) relayant un signal de données utiles à plusieurs porteuses (20) à l'intérieur d'une enveloppe de données utiles spectrale (25) et le signal de calibration ayant une amplitude qui est inférieure de manière significative au signal de données utiles à plusieurs porteuses afin de ne pas interférer avec celui, dans lequel l'enveloppe de données utiles spectrale (25) couvre la même gamme de fréquence que l'enveloppe de signal de calibration spectrale (35) et dans lequel l'enveloppe de signal de calibration spectrale (35) comprend au moins un segment d'amplitude de signal de calibration négligeable (35-0), l'amplitude de signal de calibration négligeable étant au moins inférieure de 15 dB à l'amplitude maximum.

2. Appareil de calibration (1) selon la revendication 1, comprenant en outre un élément de mise en forme de spectre (180), adapté pour symétriser des spectres d'au moins un parmi le au moins un signal de calibration (30, 30-1, 30-2, ..., 30-N), le signal de données utiles (20), les signaux reçus (400-1, 400-2, ..., 400-N), la pluralité de signaux de transmission (200-1, 200-2, ..., 200-N) et le signal de transmission global (200).

3. Appareil de calibration (1) selon la revendication 1 ou 2, dans lequel l'enveloppe de données utiles spectrale (25) comprend au moins un segment d'amplitude de données utiles négligeable (25-0).

4. Appareil de calibration (1) selon l'une quelconque des revendications précédentes, dans lequel le au moins un générateur de signal de calibration (31, 31-1, ..., 31-N) engendre au moins un signal du type à ondes entretenues en tant que le au moins un signal de calibration (30, 30-1, 30-2, ..., 30-N), à des fréquences d'amplitude non négligeable à l'intérieur de la au moins une enveloppe de signal de calibration (35).

5. Appareil de calibration (1) selon l'une quelconque des revendications précédentes, dans lequel le au moins un générateur de signal de calibration (31, 31-1, 31-2, ..., 31-N) comprend en outre :

   au moins un filtre (60-1, 60-2, ..., 60-M), pour filtrer au moins un signal de calibration de bande de base (42-1, 42-2, ..., 42-M) ;
   au moins un oscillateur (44-1, 44-2, ..., 44-M) fournissant au moins une fréquence de modulation (45-1, 45-2, 45-M), adapté pour moduler le au moins un signal de calibration de bande de base (42-1, 42-2, ..., 42-M) d'une bande de base, pour fournir le au un moins signal de calibration (30, 30-1, 30-2, ..., 30-N) d'amplitude non négligeable à l'intérieur de l'enveloppe de signal de calibration spectrale (35).

6. Appareil de calibration (1) selon la revendication 5, dans lequel le au moins un générateur de signal de calibration (31, 31-1, 31-2, ..., 31-N) comprend en outre un mélangeur de signal (50-1, 50-2, ..., 50-M) adapté pour mélanger la au moins une fréquence de modulation (45-1, 45-2, ..., 45-M) avec un signal respectif du au moins un signal de calibration de bande de base (42-1, 42-2, ..., 42-M).

7. Appareil de calibration (1) selon l'une quelconque des revendications précédentes, dans lequel le au moins un générateur de signal de calibration (31, 31-1, 31-2, ..., 31-N) comprend au moins un séquenceur de pseudo-bruit (80-1, 80-2, ..., 80-M).

8. Appareil de calibration (1) selon l'une quelconque des revendications précédentes, comprenant en outre un injecteur de signal de calibration (40-1, 40-2, ..., 40-N) adapté pour injecter le au moins un signal de calibration (30, 30-1, 30-2, ..., 30-N) dans le signal de données utiles à plusieurs porteuses(20), et
   un amplificateur (410) adapté pour amplifier le signal de données utiles à plusieurs porteuses (20).

9. Appareil de calibration (1) selon l'une quelconque des revendications précédentes, comprenant en outre au moins un renifleur (145, 145-1, 145-2, ..., 145-N) pour détecter un signal de transmission global (200) ou une pluralité de signaux de transmission (200-1, 200-2, ..., 200-N) au voisinage des éléments d'antenne (11-1, 11-2, ..., 11-N).

10. Appareil de calibration (1) selon l'une quelconque des revendications précédentes, comprenant en outre un corrélateur (150), adapté pour faire une corrélation entre au moins des paires issues du au moins un signal de calibration (30, 30-1, 30-2, ..., 30-N), du signal de transmission global (200), de la pluralité de signaux de transmission (200-1, 200-2, ..., 200-N) et d'un signal reçu (400-1, 400-2, ..., 400-N).

**11.** Appareil de calibration (1) selon l'une quelconque des revendications précédentes, comprenant en outre

une unité de paramètre (150a), adaptée pour déduire une différence d'amplitude et de phase (800) depuis le corrélateur (150).

**12.** Procédé de génération (3000) d'au moins un signal de calibration (30, 30-1, 30-2, ..., 30-N) pour un réseau d'antenne (10) comprenant :

la fourniture d'une enveloppe de signal de calibration spectrale (35) comprenant au moins un segment d'amplitude de signal de calibration négligeable (25-0), l'amplitude de signal de calibration négligeable étant au moins inférieure de 15 dB à l'amplitude maximum,
la fourniture d'au moins un signal de calibration (30, 30-1, 30-2, ..., 30-N) à l'intérieur d'une enveloppe de signal de calibration spectrale (35), ledit au moins un signal de calibration (30, 30-1, 30-2, ..., 30-N) étant adapté pour calibrer le réseau d'antenne (10) et ayant une amplitude qui est inférieure de manière significative au signal de données utiles à plusieurs porteuses afin de ne pas interférer avec celui-ci,
le réseau d'antenne (10) relayant un signal de données utiles à plusieurs porteuses (20) à l'intérieur d'une enveloppe de données utiles spectrale (25), l'enveloppe de données utiles spectrale (25) couvrant la même gamme de fréquence que l'enveloppe de signal de calibration spectrale (35).

**13.** Procédé selon la revendication 12, comprenant en outre la fourniture d'un signal du type à ondes entretenues formant le au moins un signal de calibration (30, 30-1, 30-2, ... 30-N) à des fréquences d'amplitude non négligeable à l'intérieur de l'enveloppe de signal de calibration spectrale (35).

**14.** Procédé selon l'une quelconque des revendications 12 ou 13, comprenant en outre :

- la fourniture (700) d'au moins un signal de calibration de bande de base (42-1, 42-2, ..., 42-M) ;
- le filtrage (600) du au moins un signal de calibration de bande de base (42-1, 42-2, ..., 42-M) ;
- la fourniture (810) d'au moins une fréquence de modulation (45-1, 45-2, ..., 45-M);

- la modulation (1000) du au moins un signal de calibration de bande de base (42-1, 42-2, ..., 42-N) avec l'une respective de la au moins une fréquence de modulation (45-1, 45-2, ..., 45-M) pour former le au moins un signal de calibration (30, 30-1, 30-2, ..., 30-N) à l'intérieur de l'enveloppe de signal de calibration spectrale (35).

**15.** Produit de programme d'ordinateur dans un support lisible par ordinateur et comprenant des instructions exécutables qui permettent à un processeur de réaliser le procédé selon la revendication 12.

**16.** Utilisation de l'appareil de calibration (1) de la revendication 1 pour la calibration d'un réseau d'antenne (10).

Fig. 1a

Fig. 1b

Fig. 2

Fig. 3

EP 2 371 075 B1

Fig. 4

22

Fig. 5

Fig. 6

Fig. 7

Fig. 8

Fig. 9

Fig. 10a

Fig. 10b

Fig. 10c

Fig. 10d

Fig. 11

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0821580 A
- US 61118391 A
- US 6693588 B1

- EP 1585231 A1
- EP 1178562 A1
- EP 0938204 A1